(19)

Europäisches Patentamt
European Patent Office
Office européen des brevets

(11) **EP 4 694 566 A1**

(12) **EUROPEAN PATENT APPLICATION**
published in accordance with Art. 153(4) EPC

(43) Date of publication:
**11.02.2026 Bulletin 2026/07**

(21) Application number: **24733845.2**

(22) Date of filing: **08.04.2024**

(51) International Patent Classification (IPC):
*H04W 76/28* (2018.01)   *H04W 52/02* (2009.01)
*H04W 72/21* (2023.01)   *H04W 72/23* (2023.01)
*H04W 74/0838* (2024.01)   *H04B 7/06* (2006.01)

(52) Cooperative Patent Classification (CPC):
H04B 7/06; H04W 52/02; H04W 72/21;
H04W 72/23; H04W 74/0838; H04W 76/28

(86) International application number:
**PCT/KR2024/004659**

(87) International publication number:
**WO 2024/210685 (10.10.2024 Gazette 2024/41)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **06.04.2023 US 202363457768 P**
**06.04.2023 US 202363457772 P**

(71) Applicant: **LG Electronics Inc.**
**Seoul 07336 (KR)**

(72) Inventors:
• **MYUNG, Sechang**
 **Seoul 06772 (KR)**
• **KIM, Seonwook**
 **Seoul 06772 (KR)**
• **LEE, Youngdae**
 **Seoul 06772 (KR)**
• **YANG, Suckchel**
 **Seoul 06772 (KR)**
• **HWANG, Seunggye**
 **Seoul 06772 (KR)**

(74) Representative: **Plasseraud IP**
**104 Rue de Richelieu**
**CS92104**
**75080 Paris Cedex 02 (FR)**

(54) **WIRELESS SIGNAL TRANSMISSION/RECEPTION METHOD AND DEVICE IN WIRELESS COMMUNICATION SYSTEM**

(57)   Disclosed are a method and apparatus for monitoring a downlink signal by a user equipment (UE) in a wireless communication system. The method includes receiving configuration information including a cell discontinuous transmission (DTX) configuration from a cell, transmitting an uplink signal to the cell, and determining whether to monitor a downlink signal in response to the uplink signal in an inactive period of cell DTX determined based on the configuration information, wherein whether to monitor the downlink signal is determined based on a type of the uplink signal.

FIG. 12

S121 — Receive configuration information including cell DTX configuration from cell/BS

S123 — Transmit uplink signal to cell/BS

S125 — Determine whether to monitor downlink signal in inactive period of cell DTX based on type of uplink signal

## Description

### TECHNICAL FIELD

The present disclosure relates to a wireless communication system, and more particularly, to a method and apparatus for transmitting and receiving a wireless signal.

### BACKGROUND

Wireless communication systems are widely deployed to provide various kinds of communication services such as voice and data. In general, wireless communication systems are multiple access systems that can support communication with multiple users by sharing available system resources (bandwidth, transmission power, etc.). Examples of multiple access systems include code division multiple access (CDMA) systems, frequency division multiple access (FDMA) systems, time division multiple access (TDMA) systems, orthogonal frequency division multiple access (OFDMA) systems, and single carrier frequency division multiple access (SC-FDMA) systems.

As more and more communication devices demand larger communication traffic along with the current trends, a future-generation 5th generation (5G) system is required to provide an enhanced wireless broadband communication, compared to the legacy LTE system. In the future-generation 5G system, communication scenarios are divided into enhanced mobile broadband (eMBB), ultra-reliability and low-latency communication (URLLC), massive machine-type communication (mMTC), and so on.

Herein, eMBB is a future-generation mobile communication scenario characterized by high spectral efficiency, high user experienced data rate, and high peak data rate, URLLC is a future-generation mobile communication scenario characterized by ultra-high reliability, ultra-low latency, and ultra-high availability (e.g., vehicle to everything (V2X), emergency service, and remote control), and mMTC is a future-generation mobile communication scenario characterized by low cost, low energy, short packet, and massive connectivity (e.g., Internet of things (IoT)).

### DISCLOSURE

### Technical Problem

An object of the present disclosure is to provide a method and apparatus for transmitting and receiving a signal more accurately and efficiently.

It will be appreciated by persons skilled in the art that the objects that could be achieved with the various embodiments of the present disclosure are not limited to what has been particularly described hereinabove and the above and other objects that the various embodiments of the present disclosure could achieve will be more clearly understood from the following detailed description.

### Technical Solution

According to an aspect, a method of monitoring a downlink signal by a user equipment (UE) in a wireless communication system includes receiving configuration information including a cell discontinuous transmission (DTX) configuration from a cell, transmitting an uplink signal to the cell, and determining whether to monitor a downlink signal in response to the uplink signal in an inactive period of cell DTX determined based on the configuration information, wherein whether to monitor the downlink signal is determined based on a type of the uplink signal.

Based on that the uplink signal is an uplink signal for a beam failure recovery request (BFRQ) or a contention-free RACH procedure (CFRA), the UE may perform monitoring of the downlink signal even during the inactive period of the cell DTX.

Based on that the uplink signal is a scheduling request (SR) physical uplink control channel (PUCCH), the UE may perform monitoring of the downlink signal even during the inactive period of the cell DTX.

The UE may perform monitoring of the downlink signal only in a common search space (CSS) from a UE specific search space (USS) and the CSS.

The CSS may be a specific type of CSS configured from the cell.

Based on that the uplink signal is an uplink signal that is not related to a beam failure recovery request (BFRQ) or a contention-free RACH procedure (CFRA), the UE may not perform monitoring of the downlink signal in the inactive duration of the cell DTX.

The configuration information may further include a cell discontinuous reception (DRX) configuration related to the cell, and based on that the uplink signal is a scheduling request (SR) physical uplink control channel (PUCCH), the UE may transmit a sounding reference signal (SRS) even during the inactive period of the cell DTX determined based on the cell DRX configuration.

The downlink signal may be a physical downlink control channel (PDCCH) scrambled with a cell radio network temporary identifier (C-RNTI).

According to another aspect, a computer-readable recording medium having recorded thereon a program for executing the method may be provided.

According to another aspect, a UE for performing the method of monitoring the downlink signal may be provided.

According to another aspect, a processing device for controlling a UE for performing the method of monitoring the downlink signal may be provided.

According to another aspect, a method of transmitting a downlink signal by a base station (BS) in a wireless communication system includes transmitting configuration information including a cell discontinuous transmission (DTX) configuration to a user equipment (UE), receiving an uplink signal from the UE, and determining whether to transmit a downlink signal in response to the uplink signal in an inactive period of cell DTX according to the cell DTX configuration based on a type of the uplink signal.

According to another aspect, a base station (BS) for the method of transmitting the downlink signal may be provided.

### Advantageous Effects

According to an embodiment of the present disclosure, a signal may be transmitted or received more accurately and efficiently in a wireless communication system.

Effects to be achieved by embodiment(s) are not limited to what has been particularly described hereinabove and other effects not mentioned herein will be more clearly understood by persons skilled in the art to which embodiment(s) pertain from the following detailed description.

### BRIEF DESCRIPTION OF THE DRAWINGS

The accompanying drawings, which are included to provide a further understanding of the disclosure and are incorporated in and constitute a part of this application, illustrate embodiments of the disclosure and together with the description serve to explain the principle of the disclosure.

FIG. 1 is a diagram to illustrate the physical channels utilized in the 3GPP NR system and a typical signal transmission method using them.
FIG. 2 illustrates the structure of a NR radio frame to which the present disclosure is applicable.
FIG. 3 illustrates the slot structure of a NR frame to which the present disclosure is applicable.
FIG. 4 is a diagram illustrating exemplary mapping of physical channels in a slot, to which the embodiment is applicable.
FIGs. 5 and 6 are diagrams for explaining a idle mode discontinuous reception (DRX) operation;
FIGS. 7 to 9 are diagrams for explaining a DRX operation in a radio resource control (RRC) connected mode;
FIG. 10 is a diagram for explaining a method of monitoring DCI format 2_6.
FIG. 11 illustrates an exemplary normal random access procedure
FIG. 12 is a diagram to explain a method of monitoring a downlink signal by a UE;
FIG. 13 is a diagram for configuring a method for a BS or a cell to transmit a downlink signal based on cell DTX; and
FIGs. 14 to 17 illustrate a communication system 1 and a wireless device applicable to the present disclosure.

### DETAILED DESCRIPTION

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

The term "base station" as used herein may be replaced by terms such as fixed station, Node B, gNode B (gNB), Access Point (AP), cell, or transmission and reception point (TRP). Repeater may be replaced by terms such as Relay Node (RN), Relay Station, etc. Also, the term "terminal" may be replaced by terms such as User Equipment (UE), Mobile Station (MS), Mobile Subscriber Station (MSS), Subscriber Station (SS), etc.

For clarity, the description will focus on 3GPP NR, but the technical ideas of the present disclosure are not limited thereto.

Details of the background, terminology, abbreviations, etc. used herein may be found in documents published before the present disclosure. For example, the present disclosure may be supported by the following documents:

- 38.211: Physical channels and modulation
- 38.212: Multiplexing and channel coding
- 38.213: Physical layer procedures for control
- 38.214: Physical layer procedures for data
- 38.215: Physical layer measurements
- 38.300: NR and NG-RAN Overall Description
- 38.304: User Equipment (UE) procedures in idle mode and in RRC Inactive state
- 38.321Medium Access Control (MAC) protocol specification
- 38.331: Radio Resource Control (RRC) protocol specification
- 37.213: Introduction of channel access procedures to unlicensed spectrum for NR-based access
- 36.355: LTE Positioning Protocol
- 37.355: LTE Positioning Protocol

Terms and acronyms

- 5GC: 5G Core Network
- 5GS: 5G System
- NES: network energy saving
- ES: energy saving
- SSB: synchronization signal/PBCH block
- FR: frequency range
- CC: component carrier
- NCGI: NR Cell Global Identifier
- SI: system information
- PCell: primary cell
- SCell: secondary cell
- PDCCH: Physical Downlink Control CHannel
- PDSCH: Physical Downlink Shared CHannel
- PUSCH: Physical Uplink Shared CHannel
- CSI: Channel state information
- RRM: Radio resource management
- SCS: Sub-carrier spacing
- RLM: Radio link monitoring
- DCI: Downlink Control Information
- CAP: Channel Access Procedure
- Ucell: Unlicensed cell
- TBS: Transport Block Size
- TDRA: Time Domain Resource Allocation
- SLIV: Starting and Length Indicator Value (The SLIV is a field that indicates the starting symbol index and the number of symbols in a slot for a PDSCH and/or PUSCH, and the SLIV is carried on a PDCCH scheduling the corresponding PDSCH and/or PUSCH.)

- BWP: BandWidth Part (The BWP may be composed of consecutive resource blocks (RBs) in the frequency domain, which may correspond to one numerology (e.g., subcarrier spacing, cyclic prefix (CP) length, slot/mini-slot duration, etc.). In addition, multiple BWPs may be configured on one carrier (the number of BWPs per carrier may be limited), but the number of active BWPs may be limited in each carrier (e.g., one).)
- CORESET: COntrol REsourse SET (The CORESET refers to a time frequency resource region capable of transmitting a PDCCH, and the number of CORESETs per BWP may be limited.)
- REG: Resource element group
- SFI: Slot Format Indicator (The SFI is an indicator that indicates the DL/UL direction at the symbol level in specific slot(s), and the SFI is transmitted over a group-common PDCCH.)
- COT: Channel occupancy time
- SPS: Semi-persistent scheduling
- QCL: Quasi-Co-Location (QCL relationship between two reference signals may mean that QCL parameters such as Doppler shift, Doppler spread, average delay, delay spread, Spatial Rx parameter, etc. obtained from one reference signal can be applied to the other reference signal (or antenna port(s) of that RS). In the NR system, four QCL types are defined as follows 'typeA': {Doppler shift, Doppler spread, average delay, delay spread}, 'typeB': {Doppler shift, Doppler spread}, 'typeC': {Doppler shift, average delay}, 'typeD': {Spatial Rx parameter} For any DL RS antenna port(s), the first DL RS may be set to a reference to QCL type X (X=A, B, C, or D), and the second DL RS may be set to a reference to QCL type Y (Y=A, B, C, or D but X≠Y).
- TCI: Transmission Configuration Indication (One TCI state contains the QCL relationship between one or more DL RSs, such as the DM-RS ports of the PDSCH, the DM-RS port of PDCCH, or the CSI-RS port(s) of a CSI-RS resource. For the "Transmission Configuration Indication' field in the DCI scheduling PDSCH, the TCI state index corresponding to each code point comprising the field is activated by the MAC CE, and the TCI state setting for each TCI state index is set through RRC signaling. In Rel-16 NR systems, the corresponding TCI state is set between DL RSs, but future releases may allow setting between DL RSs and UL RSs or between UL RSs and UL RSs. Examples of UL RS are SRS, PUSCH DM-RS, PUCCH DM-RS, etc.).
- SRI: SRS resource indicator (indicates one of the SRS resource index values set in 'SRS resource indicator' among the fields in the DCI scheduling PUSCH. When transmitting PUSCH, the terminal can transmit PUSCH utilizing the same spatial domain transmission filter used to transmit and receive the reference signal associated with the corresponding SRS resource. In this case, the reference RS is set by RRC signaling through the SRS-SpatialRelationInfo parameter for each SRS resource, and SS/PBCH block, CSI-RS, or SRS may be set as the reference RS.)
- TRP: Transmission and Reception Point

In a wireless communication system, a terminal receives information from a base station through a downlink (DL), and a terminal transmits information to the base station through an uplink (UL). The information transmitted and received by the base station and the terminal includes data and various control information, and various physical channels exist depending on the type/use of the information they transmit and receive.

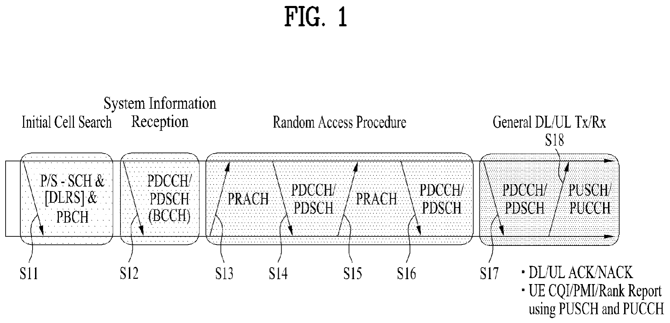

FIG. 1 is a diagram to illustrate the physical channels utilized in the 3GPP NR system and a typical signal transmission method using them.

When powered on or when a UE initially enters a cell, the UE performs initial cell search involving synchronization with a BS in step S11. For initial cell search, the UE receives a synchronization signal block (SSB). The SSB includes a primary synchronization signal (PSS), a secondary synchronization signal (SSS), and a physical broadcast channel (PBCH). The UE synchronizes with the BS and acquires information such as a cell Identifier (ID) based on the PSS/SSS. Then the UE may receive broadcast information from the cell on the PBCH. In the meantime, the UE may check a downlink channel status by receiving a downlink reference signal (DL RS) during initial cell search.

After initial cell search, the UE may acquire more specific system information by receiving a physical downlink control channel (PDCCH) and receiving a physical downlink shared channel (PDSCH) based on information of the PDCCH in step S12.

Subsequently, to complete connection to the eNB, the UE may perform a random access procedure with the eNB (S13 to S16). In the random access procedure, the UE may transmit a preamble on a physical random access channel (PRACH) (S13) and may receive a PDCCH and a random access response (RAR) for the preamble on a PDSCH associated with the PDCCH (S14). The UE may transmit a physical uplink shared channel (PUSCH) by using scheduling information in the RAR (S15), and perform a contention resolution procedure including reception of a PDCCH signal and a PDSCH signal corresponding to the PDCCH signal (S16).

After the above procedure, the UE may receive a PDCCH and/or a PDSCH from the BS (S17) and transmit a PUSCH and/or a physical uplink control channel (PUCCH) to the BS (S18), in a general UL/DL signal transmission procedure. Control information that the UE transmits to the BS is generically called uplink control information (UCI). The UCI includes a hybrid automatic repeat and request acknowledgement/negative acknowledgement (HARQ-ACK/NACK), a scheduling request (SR), a channel quality indicator (CQI), a precoding matrix index (PMI), a rank indicator (RI), etc. In general, UCI is transmitted periodically on a PUCCH. However, if control information and traffic data should be transmitted simultaneously, the control information and traffic data may be transmitted on a PUSCH. In addition, the UCI may be transmitted aperiodically on the PUSCH, upon receipt of a request/command from a network.

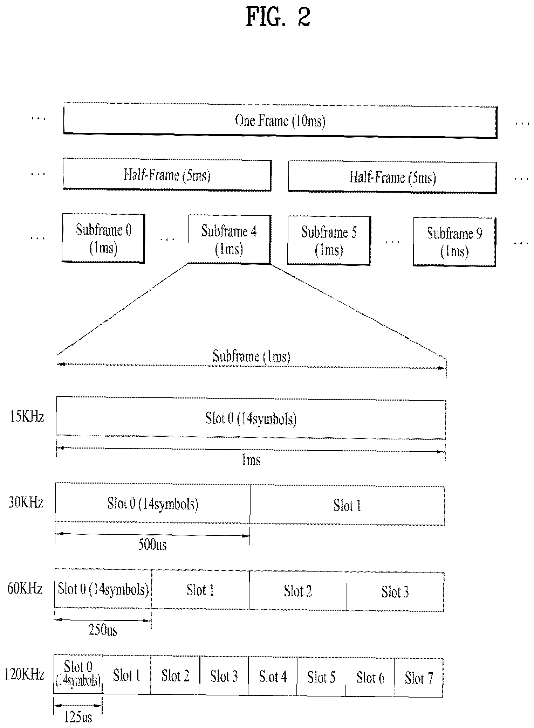

FIG. 2 illustrates the structure of a NR radio frame to which the present disclosure is applicable. Referring to FIG. 2, a radio frame may be used for UL transmission and DL transmission in NR. A radio frame is 10 ms in length, and may be defined by two 5-ms half-frames. An HF may include five 1-ms subframes. A subframe may be divided into one or more slots, and the number of slots in an SF may be determined according to a subcarrier spacing (SCS). Each slot may include 12 or 14 OFDM(A) symbols according to a cyclic prefix (CP).

Table 1 shows how the number of symbols per slot, the number of slots per frame, and the number of slots per subframe varies depending on the SCS when normal CP is used.

[Table 1]

| SCS (15*2u) | $N^{slot}_{symb}$ | $N^{frame,u}_{slot}$ | $N^{subframe,u}_{slot}$ |
|---|---|---|---|
| 15 kHz (u=0) | 14 | 10 | 1 |
| 30 kHz (u=1) | 14 | 20 | 2 |
| 60 kHz (u=2) | 14 | 40 | 4 |
| 120 kHz (u=3) | 14 | 80 | 8 |
| 240 kHz (u=4) | 14 | 160 | 16 |
| * $N^{slot}_{symb}$: Number of symbols in a slot<br>* $N^{frame,u}_{slot}$: Number of slots in the frame<br>* $N^{subframe,u}_{slot}$: Number of slots in the subframe | | | |

Table 2 below lists the number of symbols per slot, the number of slots per frame, and the number of slots per subframe according to an SCS in the ECP case.

[Table 2]

| SCS (15*2^u) | $N^{slots}_{ymb}$ | $N^{frame,u}_{slot}$ | $N^{subframe,u}_{slot}$ |
|---|---|---|---|
| 60 kHz (u=2) | 12 | 40 | 4 |

The structure of a frame is only an example, and the number of subframes, number of slots, and number of symbols in a frame can be varied.

In the NR system, different OFDM(A) numerologies (e.g., SCSs, CP lengths, etc.) may be configured for a plurality of cells aggregated for one UE. Thus, the (absolute) duration of a time resource (e.g., SF, slot, or TTI) including the same number of symbols may differ between the aggregated cells (such a time resource is commonly referred to as a time unit (TU) for convenience of description).

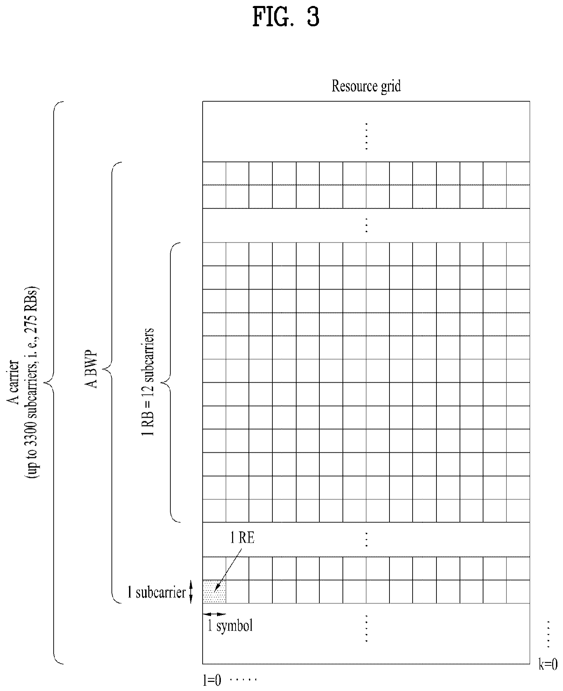

FIG. 3 illustrates the slot structure of a NR frame to which the present disclosure is applicable. Referring to FIG. 3, one slot includes a plurality of symbols in the time domain. For example, one slot may include 14 symbols in a normal CP and 12 symbols in an extended CP. Alternatively, one slot may include 7 symbols in the normal CP and 6 symbols in the extended CP. A carrier may include a plurality of subcarriers in the frequency domain. A resource block (RB) is defined as a plurality of consecutive subcarriers (e.g., 12 subcarriers) in the frequency domain. A bandwidth part (BWP) may be defined as a plurality of consecutive (P)RBs in the frequency domain, and the BWP may correspond to one numerology (e.g., SCS, CP length, etc.). The carrier may include up to N (e.g., 5) BWPs. Data communication may be conducted in an activated BWP. In a resource grid, each element may be referred to as a resource element (RE) and may be mapped to one complex symbol.

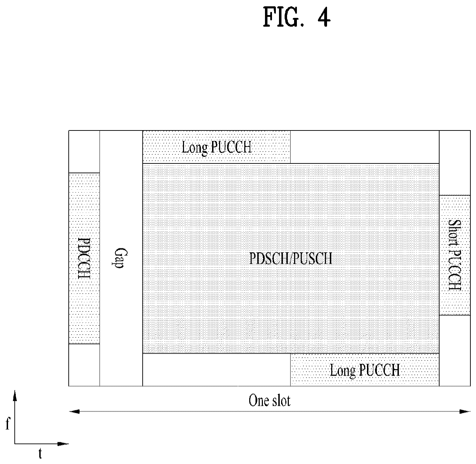

FIG. 4 is a diagram illustrating exemplary mapping of physical channels in a slot, to which the embodiment is applicable. One slot may include all of a DL control channel, DL or UL data, and a UL control channel. For example, the first N symbols of a slot may be used to transmit a DL control channel (hereinafter, referred to as a DL control region), and the last M symbols of the slot may be used to transmit a UL control channel (hereinafter, referred to as a UL control region). Each of N and M is an integer equal to or larger than 0. A resource area (hereinafter, referred to as a data region) between the DL control region and the UL control region may be used to transmit DL data or UL data. There may be a time gap for DL-to-UL or UL-to-DL switching between a control region and a data region. A PDCCH may be transmitted in the DL control region, and a PDSCH may be transmitted in the DL data region. Some symbols at a DL-to-UL switching time in the slot may be used as the time gap.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g. a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

To receive PDCCH, the terminal may monitor (e.g., blind decode) a set of PDCCH candidates in the CORESET. PDCCH candidates represent the CCE(s) that the terminal monitors for PDCCH reception/detection. PDCCH monitoring may be performed on one or more CORESETs on the active DL BWP on each active cell for which PDCCH monitoring is enabled. The set of PDCCH candidates monitored by the terminal is defined as the PDCCH Search Space (SS) set. The SS set may be a Common Search Space (CSS) set or a UE-specific Search Space (USS) set.

Table 3 shows the characteristics of each SS.

[Table 3]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type 1-PDCCH | Common | RA-RNTI or TC-RNTI on a primary cell | Msg2, Msg4 in RACH |
| Type2-PDCCH | Common | P-RNTI on a primary cell | Paging System Information change notification |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

SS sets may be established via system information (e.g., MIB) or terminal-specific upper layer (e.g., RRC) signaling. Each DL BWP in the serving cell may have no more than S (e.g., 10) SS sets established. For example, the following parameters/information may be provided for each SS set Each SS set is associated with one CORESET, and each CORESET configuration may be associated with one or more SS sets.

- searchSpaceId: Represents the ID of the SS set.
- controlResourceSetId: Indicates the CORESET associated with the SS set.
- monitoringSlotPeriodicityAndOffset: Indicates the PDCCH monitoring periodicity interval (in slots) and the PDCCH monitoring interval offset (in slots).
- monitoringSymbolsWithinSlot: Indicates the first OFDMA symbol(s) for PDCCH monitoring within the slot for which PDCCH monitoring is enabled. It is indicated via a bitmap, where each bit corresponds to each OFDMA symbol within the slot. The MSB of the bitmap corresponds to the first OFDM symbol in the slot. The OFDMA symbol(s) corresponding to the bit(s) with a bit value of 1 corresponds to the first symbol(s) in the CORESET in the slot.
- nrofCandidates: Indicates the number of PDCCH candidates per AL={ 1, 2, 4, 8, 16} (e.g., a value of one of 0, 1, 2, 3, 4, 5, 6, 8).
- searchSpaceType: Indicates whether the SS type is CSS or USS.
- DCI format: Indicates the DCI format of the PDCCH candidate.

Based on the CORESET/SS set settings, the terminal may monitor PDCCH candidates in one or more SS sets in the slot. An occasion (e.g., a time/frequency resource) for monitoring PDCCH candidates is defined as a PDCCH (monitoring) opportunity. One or more PDCCH (monitoring) opportunities may be configured within a slot.

[Table 4]

| PUCCH format | Length in OFDM symbols $N_{symb}^{PUCCH}$ | Number of bits | Usage | Etc |
|---|---|---|---|---|
| 0 | 1-2 | $\leq 2$ | HARQ, SR | Sequence selection |
| 1 | 4-14 | $\leq 2$ | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM (no UE multiplexing) |
| 4 | 4-14 | >2 | HARQ, CSI, [SR] | DFT-s-OFDM (Pre DFT OCC) |

1) PUCCH Format 0 (PF0)

- Supported UCI payload size: up to K bits (e.g., K = 2)
- Number of OFDM symbols that make up a single PUCCH: 1 to X symbols (e.g., X = 2)
- Transmission structure: consists of UCI signals only, without DM-RS, and transmits UCI status by selecting and transmitting one of several sequences

2) PUCCH Format 1 (PF1)

- Supported UCI payload size: up to K bits (e.g., K = 2)
- Number of OFDM symbols that make up a single PUCCH: Y to Z symbols (e.g., Y = 4, Z = 14)
- Transmission structure: DM-RS and UCI composed of different OFDM symbols in TDM form, with UCI multiplying certain sequences with modulation (e.g., QPSK) symbols. Cyclic Shift (CS)/Orthogonal Cover Code (OCC) applied to both UCI and DM-RS to support CDM between multiple PUCCH resources (within the same RB) (following PUCCH format 1).

3) PUCCH Format 2 (PF2)

- Supported UCI payload size: more than K bits (e.g., K = 2)
- Number of OFDM symbols that make up a single PUCCH: 1 to X symbols (e.g., X = 2)
- Transmission structure: DMRS and UCI are configured/mapped in FDM form within the same symbol and transmitted by applying only IFFT without DFT to the encoded UCI bits.

4) PUCCH Format 3 (PF3)

- Supported UCI payload size: more than K bits (e.g., K = 2)
- Number of OFDM symbols that make up a single PUCCH: Y to Z symbols (e.g., Y = 4, Z = 14)
- Transmission structure: DMRS and UCI are configured/mapped in TDM form to different symbols and transmitted by applying DFT to the augmented UCI bits. Multiplexing is supported for multiple terminals by applying OCC in the DFT preamble to UCI and CS (or IFDM mapping) to DMRS.

5) PUCCH Format 4 (PF4)

- Supported UCI payload size: more than K bits (e.g., K = 2)
- Number of OFDM symbols that make up a single PUCCH: Y to Z symbols (e.g., Y = 4, Z = 14)
- Transmission structure: DMRS and UCI are configured/mapped to different symbols in TDM format and transmitted without multiplexing between terminals by applying DFT to the encoded UCI bits.

**DRX (Discontinuous Reception) operation**

The UE uses Discontinuous Reception (DRX) in RRC_IDLE and RRC_INACTIVE state in order to reduce power consumption. When the DRX is configured, the UE performs a DRX operation according to DRX configuration information.
When the UE operates based on the DRX, the UE repeats ON/OFF for reception. For example, when the DRX is configured, the UE attempts to receive/detect a PDCCH (e.g., PDCCH monitoring) only in a predetermined time interval (e.g., ON), and does not attempt to receive the PDCCH in the remaining time period (e.g., OFF/sleep).

At this time, a time period during which the UE should attempt to receive the PDCCH is referred to as an On-duration, and this on-duration is defined once per DRX cycle. The UE can receive DRX configuration information from a gNB through a RRC signaling and operate as the DRX through a reception of the (Long) DRX command MAC CE.

The DRX configuration information may be included in the MAC-CellGroupConfig. The IE MAC-CellGroupConfig is used to configure MAC parameters for a cell group, including DRX.

DRX (Discontinuous Reception) means an operation mode for enabling a UE (User Equipment) to reduce battery consumption so that the UE can receive/monitor a downlink channel discontiguously. That is, a UE configured with DRX can reduce power consumption by receiving a DL signal discontiguously. The DRX operation is performed in a DRX cycle indicative of a time interval in which On Duration is periodically repeated. The DRX cycle includes On Duration and sleep duration (or Opportunity for DRX). The On Duration indicates a time interval in which a UE monitors a PDCCH in order to receive the PDCCH. DRX may be performed in an RRC (Radio Resource Control)_IDLE state (or mode), an RRC_INACTIVE state (or mode), or an RRC_CONNECTED state (or mode). In the RRC_IDLE state and the RRC_INACTIVE state, DRX is used to receive a paging signal discontiguously.

RRC_Idle state: state in which a radio connection (RRC connection) is not established between a base station and a UE.

- RRC Inactive state: state in which a radio connection (RRC connection) has been established between a base station and a UE, but a radio connection is inactivated.
- RRC_Connected state: state in which a radio connection (RRC connection) has been established between a base station and a UE.

DRX is basically divided into Idle mode DRX, Connected DRX (C-DRX) and extended DRX. DRX applied in the RRC IDLE state is called Idle mode DRX, and DRX applied in the RRC CONNECTED state is called Connected mode DRX (C-DRX).

eDRX (Extended/enhanced DRX) is a mechanism capable of expanding the cycle of Idle mode DRX and C-DRX. In the Idle mode DRX, whether to permit eDRX may be configured based on system information (e.g., SIB 1).

The SIB1 may include an eDRX-Allowed parameter. The eDRX-Allowed parameter is a parameter indicating whether Idle mode extended DRX is permitted.

## (1) IDLE Mode DRX

In the IDLE mode, the UE may use DRX to reduce power consumption. One paging occasion (PO) may be a time interval (e.g., a slot or a subframe) in which a paging-radio network temporary identifier (P-RNTI) based physical downlink control channel (PDCCH) may be transmitted. The P-RNTI-based PDCCH may address/schedule a paging message. For P-RNTI-based PDCCH transmission, the PO may indicate a first subframe for PDCCH repetition.

One paging frame (PF) is one radio frame which may include one or a plurality of paging occasions. When DRX is used, a UE may be configured to monitor only one PO per DRX cycle. The PF, PO and/or PNB may be determined based on a DRX parameter provided via network signaling (e.g., system information).

Hereafter, 'PDCCH' may refer to MPDCCH, NPDCCH and/or normal PDCCH. Hereafter, 'UE' may refer to MTC UE, BL (Bandwidth reduced Low complexity)/CE (coverage enhanced) UE, NB-IoT UE, Reduced Capability (RedCap) UE, normal UE and/or IAB-MT (mobile termination).

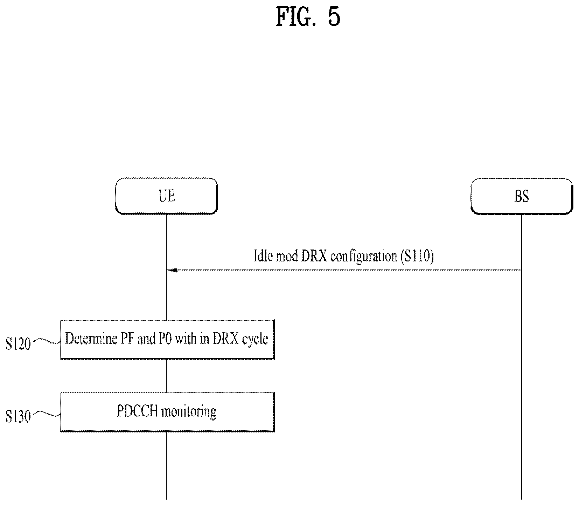

FIG. 5 is a flowchart showing an example of a method of performing an Idle mode DRX operation.

A UE receives, from a base station, Idle mode DRX configuration information through a higher layer signaling (e.g., system information) (S110).

Furthermore, the UE determines a PF (Paging Frame) and a PO (Paging Occasion), for monitoring a physical downlink control channel (e.g., PDCCH) in a paging DRX cycle based on the Idle mode DRX configuration information (S120). In this case, the DRX cycle includes On Duration and sleep duration (or Opportunity for DRX).

Furthermore, the UE monitors a PDCCH in the PO of the determined PF (S130). The UE monitors only one time interval (PO) for each paging DRX cycle. For example, the time interval may be a slot or a subframe.

Additionally, if the UE receives a PDCCH (more exactly, CRC of PDCCH) scrambled by a P-RNTI during On duration (i.e., if paging is detected), the UE may transit to a connected mode and transmit or receive data with the base station

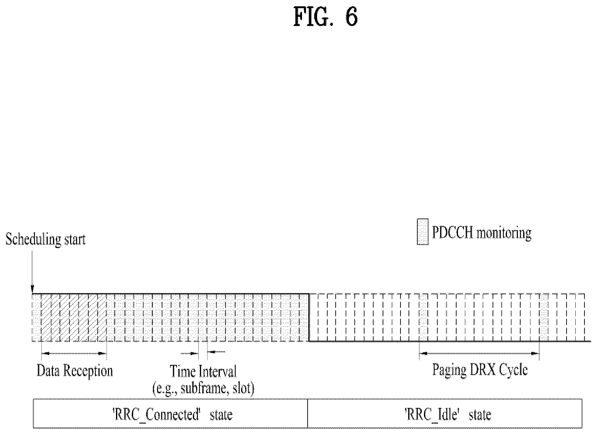

FIG. 6 is a diagram showing an example of an Idle mode DRX operation.

Referring to FIG. 6, if there is a traffic (data) toward a UE in the RRC_Idle state (hereinafter referred to as 'Idle state'), paging occurs toward the corresponding UE.

Thus, the UE wakes up every (paging) DRX cycle and monitors a PDCCH.

If Paging is present, the UE transits to a Connected state, and receives data. Otherwise, the UE may enter a sleep mode again.

## (2) Connected Mode DRX (C-DRX)

C-DRX is DRX applied in the RRC Connected state. The DRX cycle of C-DRX may be configured with a Short DRX cycle and/or a Long DRX cycle. The Short DRX cycle is Optional.

If C-DRX is configured, a UE performs PDCCH monitoring for On Duration. If there is a PDCCH successfully detected during the PDCCH monitoring, the UE operates (or runs) an inactivity timer and maintains an awake state. In contrast, if there is no PDCCH successfully detected during the PDCCH monitoring, the UE enters to a sleep state after the On Duration is ended.

If C-DRX is configured, a PDCCH reception occasion (e.g., a slot having a PDCCH search space/candidate) may be configured discontiguously based on a C-DRX configuration. In contrast, if C-DRX is not configured, a PDCCH reception occasion (e.g., a slot having a PDCCH search space/candidate) may be configured contiguously in accordance with PDCCH search space configuration. Meanwhile, PDCCH monitoring may be limited in a time interval configured as a measurement gap, regardless of a C-DRX configuration.

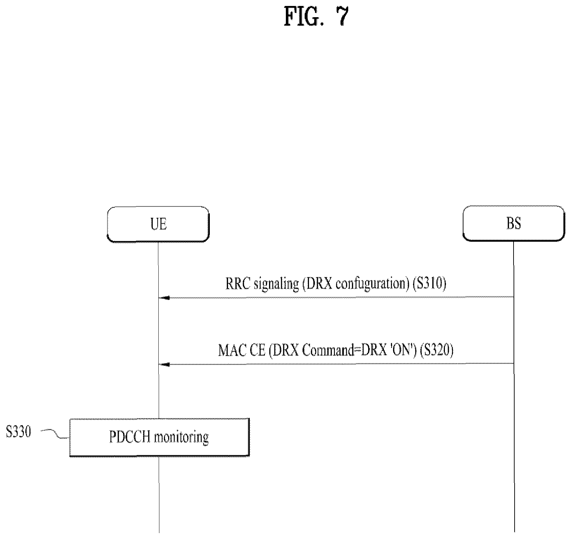

FIG. 7 is a flowchart showing an example of a method of performing a C-DRX operation.

A UE receives, from a base station, RRC signalling (e.g., MAC-MainConfig IE) including DRX configuration information (S310). The DRX configuration information may include the following information.

- on-duration: the duration that the UE waits for, after waking up, to receive PDCCHs. If the UE successfully decodes a PDCCH, the UE stays awake and starts the drx-inactivity timer;
- onDurationTimer: the duration in which the DRX cycle starts. For example, the duration may refer to a time interval to be continuously monitored at the beginning of a DRX cycle, which may be represented in units of milliseconds (ms).
- drx-InactivityTimer: the duration after the PDCCH occasion in which a PDCCH indicates a new UL or DL transmission for the MAC entity. For example, the duration may be a time interval represented in units of ms after the UE decodes the PDCCH including scheduling information. That is, the duration refers to a duration in which the UE waits to successfully decode another PDCCH after decoding the PDCCH. If no other PDCCHs are detected within the corresponding duration, the UE transitions to the sleep mode.

The UE restarts the drx-inactivity timer after successfully decoding a PDCCH for initial transmission only except for a PDCCH for retransmission.

- drx-RetransmissionTimer: for DL, the maximum duration until a DL retransmission is received; for UL the maximum duration until a grant for UL retransmission is received. For example, for UL, drx-RetransmissionTimer indicates the number of slots in a bandwidth part (BWP) where a transport block (TB) to be retransmitted is transmitted. For DL, drx-RetransmissionTimer indicates the number of slots in a BWP in which a TB to be retransmitted is received.
- longDRX-Cycle: On Duration occurrence period
- drxStartOffset: a subframe number in which a DRX cycle is started
- drxShortCycleTimer: the duration the UE shall follow the Short DRX cycle;
- shortDRX-Cycle: a DRX Cycle operating as much as a drxShortCycleTimer number when Drx-InactivityTimer is terminated
- drx-SlotOffset: the delay before drx-onDurationTimer starts. For example, the delay may be expressed in units of ms, and more particularly, in multiples of 1/32 ms.
- Active time: total duration that the UE monitors PDCCH, which may include (a) the "on-duration" of the DRX cycle, (b) the time UE is performing continuous reception while the drx-inactivity timer has not expired, and (c) the time when the UE is performing continuous reception while waiting for a retransmission opportunity.

Specifically, when the DRX cycle is configured, an active time for a serving cell of a DRX group includes the following.

- (a) drx-onDurationTimer or (b) drx-InactivityTimer configured for the DRX group is running; or
- (c) drx-RetransmissionTimerDL or drx-RetransmissionTimerUL is running on any Serving Cell in the DRX group; or
- (d) ra-ContentionResolutionTimer or msgB-ResponseWindow is running; or
- (e) a Scheduling Request is sent on PUCCH and is pending; or
- (f) a PDCCH indicating a new transmission addressed to the C-RNTI of the MAC entity has not been received after successful reception of a Random Access Response for the Random Access Preamble not selected by the MAC entity among the contention-based Random Access Preamble.

Furthermore, if DRX 'ON' is configured through the DRX command of a MAC CE (command element) (S320), the UE monitors a PDCCH for the ON duration of a DRX cycle based on the DRX configuration (S330).

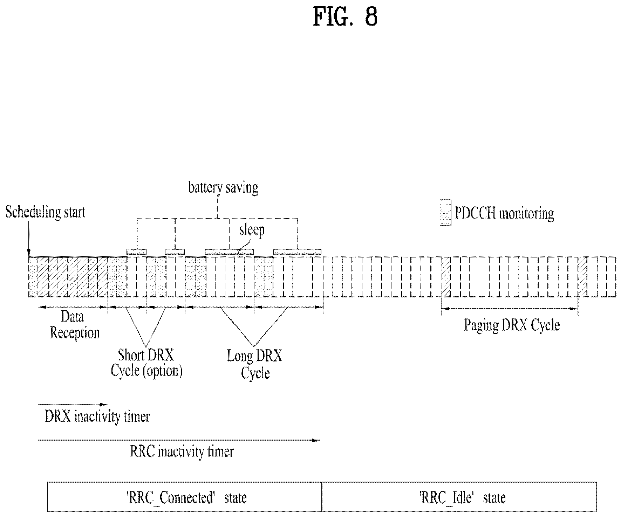

FIG. 8 is a diagram showing an example of a C-DRX operation.

Referring to FIG. 8 when the UE receives scheduling information (e.g., DL assignment or UL grant) in the RRC_Connected state (hereinafter referred to as the connected state), the UE runs a DRX inactivity timer and an RRC inactivity timer.

After the DRX inactivity timer expires, a DRX mode starts. The UE wakes up in a DRX cycle and monitors a PDCCH during a predetermined time (on duration timer).

In this case, if Short DRX is configured, when the UE starts the DRX mode, the UE first starts in a short DRX cycle, and starts to a long DRX cycle after the short DRX cycle is terminated. The Long DRX cycle is a multiple of the short DRX cycle. In the short DRX cycle, the UE wakes up more frequently. After the RRC inactivity timer expires, the UE shifts to an Idle state and performs an Idle mode DRX operation.

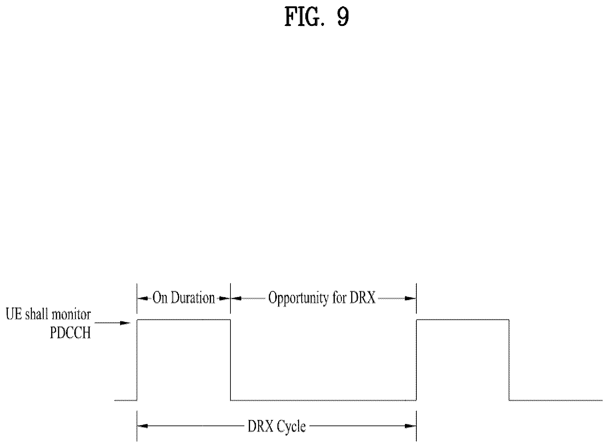

FIG. 9 illustrates a DRX cycle. The C-DRX operation has been introduced for power saving of the UE. If the UE receives no PDCCH within the on-duration defined for each DRX cycle, the UE enters the sleep mode until the next DRX cycle and does not perform transmission/reception.

On the other hand, when the UE receives a PDCCH within the on-duration, the active time may continue (or increase) based on the operations of an inactivity timer, a retransmission timer, etc. If the UE receives no additional data within the active time, the UE may operate in the sleep mode until the next DRX operation.

In NR, a wake-up signal (WUS) has been introduced to obtain additional power saving gain in addition to the existing C-DRX operation. The WUS may be to inform whether the UE needs to perform PDCCH monitoring within the on-duration of each DRX cycle (or a plurality of DRX cycles). If the UE detects no WUS on a specified or indicated WUS occasion, the UE may maintain the sleep mode without performing PDCCH monitoring in one or more DRX cycles associated with the corresponding WUS.

(3) WUS (DCI Format 2_6)

According to the power saving technology of Rel-16 NR systems, when the DRX operation is performed, it is possible to inform the UE whether the UE needs to wake up for each DRX cycle by DCI format 2_6.

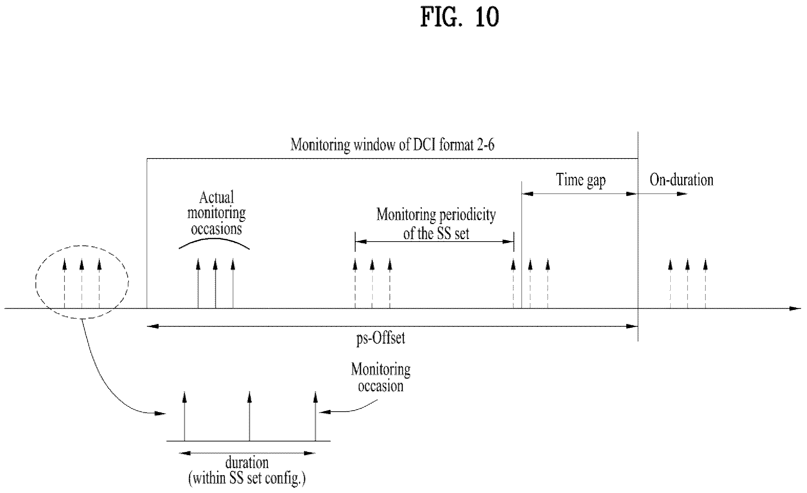

Referring to FIG. 10, a PDCCH monitoring occasion for DCI format 2_6 may be determined by ps-Offset indicated by the network and a time gap reported by the UE. In this case, the time gap reported by the UE may be interpreted as a preparation period necessary for an operation after the UE wakes up.

Referring to FIG. 10, the base station (BS) may provide the UE with a search space (SS) set configuration capable of monitoring DCI format 2_6. According to the corresponding SS set configuration, DCI format 2_6 may be monitored in consecutive slots as long as the duration at the monitoring periodicity interval.

In the DRX configuration, a monitoring window for monitoring DCI format 2_6 may be determined by the start time of the DRX cycle (e.g., a point where the on-duration timer starts) and ps-Offset configured by the BS. In addition, PDCCH monitoring may not be required in the time gap reported by the UE. Consequently, an SS set monitoring occasion on which the UE actually performs monitoring may be determined as a first full duration (i.e., actual monitoring occasions of FIG. 10) within the monitoring window.

If the UE detects DCI format 2_6 in the monitoring window configured based on ps-Offset, the UE may be informed by the BS whether the UE wakes up in the next DRX cycle.

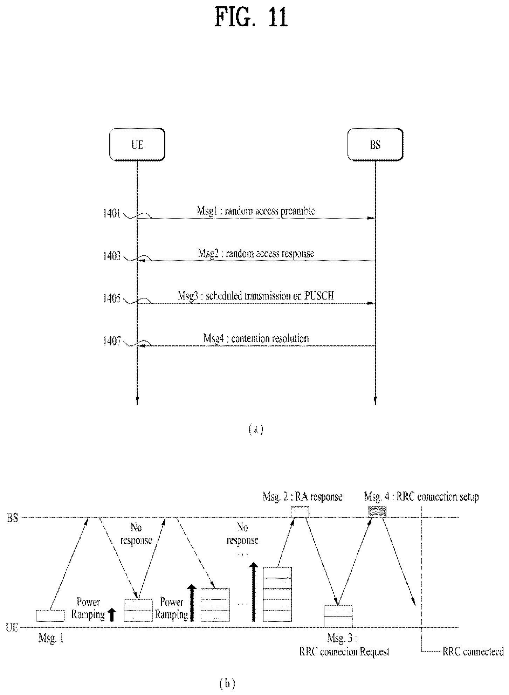

FIG. 11 illustrates an exemplary normal random access procedure. Specifically, FIG. 11 shows a contention-based random access procedure of the UE, which is performed in four steps.

First, the UE may transmit message 1 (Msg1) including a random access preamble on a PRACH (see 1701 of FIG. 11(a))

Random access preamble sequences with different lengths may be supported. A long sequence length of 839 may be applied to SCSs of 1.25 and 5 kHz, and a short sequence length of 139 may be applied to SCSs of 15, 30, 60, and 120 kHz.

Multiple preamble formats may be defined by one or more RACH OFDM symbols and different CPs (and/or guard times). A RACH configuration for a cell may be included in SI about the cell and provided to the UE. The RACH configuration may include information on the SCS of the PRACH, available preambles, preamble formats, and so on. The RACH configuration may include information about association between SSBs and RACH (time-frequency) resources. The UE transmits a random access preamble on a RACH time-frequency resource associated with a detected or selected SSB.

The threshold of an SSB for RACH resource association may be configured by the network, and a RACH preamble may be transmitted or retransmitted based on an SSB where reference signal received power (RSRP), which is measured based on the SSB, satisfies the threshold. For example, the UE may select one SSB from among SSBs that satisfy the threshold and transmit or retransmit the RACH preamble based on a RACH resource associated with the selected SSB.

Upon receiving the random access preamble from the UE, the BS may transmit message 2 (Msg2) corresponding to a random access response (RAR) message to the UE (see 1703 of FIG. 11(a)). A PDCCH scheduling a PDSCH carrying the RAR may be CRC masked with a random access (RA) radio network temporary identifier (RNTI) (RA-RNTI) and then transmitted. Upon detecting the PDCCH masked by the RA-RNTI, the UE may obtain the RAR from the PDSCH scheduled by DCI carried by the PDCCH. The UE may check whether the RAR includes RAR information in response to the preamble transmitted by the UE, i.e., Msg1. The presence or absence of the RAR information in response to Msg1 transmitted by the UE may be determined based on whether there is a random access preamble ID for the preamble transmitted by the UE. If there is no response to Msg1, the UE may retransmit the RACH preamble within a predetermined number of times while performing power ramping. The UE may calculate PRACH transmit power for retransmitting the preamble based on the most recent path loss and power ramping counter.

The RAR information transmitted on the PDSCH may include timing advance (TA) information for UL synchronization, an initial UL grant, and a temporary cell-RNTI (C-RNTI). The TA information may be used to control a UL signal transmission timing. The UE may transmit a UL signal over a UL shared channel as message 3 (Msg3) of the random access procedure based on the RAR information (see 1705 of FIG. 11(a)). Msg3 may include an RRC connection request and a UE identifier. In response to Msg3, the network may transmit message 4 (Msg4), which may be treated as a contention resolution message on DL (see 1707 of FIG. 11(a)). Upon receiving Msg4, the UE may enter the RRC_CONNECTED state.

On the other hand, a contention-free random access procedure may be performed when the UE is handed over to another cell or BS or when it is requested by the BS. In the contention-free random access procedure, a preamble to be used by the UE (hereinafter referred to as a dedicated random access preamble) is allocated by the BS. Information on the dedicated random access preamble may be included in an RRC message (e.g., handover command) or provided to the UE through a PDCCH order. When the random access procedure is initiated, the UE may transmit the dedicated random access preamble to the BS. When the UE receives an RAR from the BS, the random access procedure is completed.

As described above, a UL grant in the RAR may schedule PUSCH transmission to the UE. A PUSCH carrying initial UL transmission based on the UL grant in the RAR is referred to as an Msg3 PUSCH. The content of an RAR UL grant may start at the MSB and end at the LSB.

In the uncontested random access procedure, the CSI request field in the RAR UL grant indicates whether the terminal wants to include aperiodic CSI reporting in its PUSCH transmission. The subcarrier spacing for Msg3 PUSCH transmissions is provided by the RRC parameter. The terminal shall transmit PRACH and Msg3 PUSCH on the same uplink carrier in the same service delivery cell. The UL BWP for Msg3 PUSCH transmission is dictated by the System-InformationBlock1 (SIB1).

## Network energy saving (NES)

BS energy saving may contribute to building an eco-friendly network by reducing carbon emissions and reducing the operational expenditure (OPEX) of communication operators, and may be considered important in wireless communication systems, including 3GPP. In particular, as a high transmission rate is required due to introduction of 5G communications, BSs need to include a greater number of antennas and provide services through wider bandwidth and frequency bands. Thus, energy costs of the BS reach a level of 20 % of total OPEX according to recent study. Due to this increased interest in BS energy savings, a new study item called "study on network energy savings" is approved in 3GPP NR release 18.

In detail, in the corresponding item, to improve the energy-saving capabilities of the BS in terms of transmission and reception, the following enhancement techniques have been considered.

- Method of more precisely adjusting transmission and/or reception dynamically and/or semi-statically and method of achieving more efficient operation through potential UE support/feedback and potential UE support information in one or more of network energy saving techniques in the time, frequency, space and power domains

Hereinafter, a method of instructing/configuring OFF of a specific signal/channel or configuring a valid period during an inactive duration and transmission/reception operations of a UE at this time while a BS performs cell-specific discontinuous transmission (DTX)/discontinuous reception (DRX) operation in which an active period and an inactive period are periodically repeated to save energy will be explained in detail.

## TRX operation within cell DTX-DRX inactive period

When a UE enters a connected mode after initial connection to a BS, the UE needs to continuously monitor a PDCCH to check whether there is a transmission scheduled for the UE in each search space (SS) configured. However, when such scheduled transmission does not always occur, a battery of the UE may quickly be consumed due to an unnecessary PDCCH monitoring operation each time. Accordingly, the BS may configure an ON duration in which PDCCH monitoring needs to be performed and an OFF duration in which PDCCH monitoring is not required for the UE. That is, the BS may configure connected mode discontinuous reception (C-DRX) to the UE for power saving of the UE. In terms of the BS, C-DRX of the UE may also be helpful for energy saving (ES). For example, the BS does not need to transmit a PDCCH of a specific UE in the C-DRX OFF duration of the specific UE, and thus may use its resource (e.g., resources for the C-DRX OFF during of a specific UE) for other purposes, or may obtain ES gain through DTX/DRX. However, the UE may perform transmission without restrictions on pre-configured resources (e.g., SR, PUCCH, or CG-PUSCH) even in the OFF duration, and thus the BS needs to wait for UL reception from the UE without knowing when transmission will occur. C-DRX is configured UE-specifically, and thus a DRX cycle or ON/OFF duration is not aligned for each UE within a cell (or BS). Therefore, when the ON duration of UEs are configured to be TDMed, the BS may not sleep for PDCCH transmission in each ON duration, and it may be difficult to expect ES gain.

Therefore, the BS needs to be configured/instructed to turn OFF transmission/reception of a specific signal/-channel during a specific duration (i.e., inactive period) through ta cell (-specific) DTX/DRX operation of the BS. Hereinafter, a limited DTX/DRX operation, which achieves an energy saving effect but allows limited transmission/reception only under a certain condition and a transmission/reception method of the UE at this time will be described in detail.

Hereinafter, the BS operating in a NES mode for ES means an operation in which the BS pre-configures a plurality of OFF durations (DTX inactive duration of the BS), in which transmission of a specific DL signal is turned off for a specific duration, and dynamically indicates one of the OFF durations to indicate that a corresponding DL signal is not transmitted for a predefined duration, thereby reducing power consumption of the BS and the UE. An operation in an NES mode may refer to an operation mode in which the BS does not perform transmission and/or reception not only in the time domain but also in the frequency domain and the spatial domain to reduce power consumption of the BS and the UE. For example, the BS may not perform transmission and/or reception of a signal/channel through BWP switching and dynamic resource block (RB) adaptation in the frequency domain, or may semi-statically or dynamically turn off a specific reception antenna port of the BS in the spatial domain and may not perform transmission and/or reception of a signal/channel through the turned-off antenna port.

For UE C-DRX, the UE may perform PDCCH monitoring in periodic ON duration to check whether there is DL/UL to be transmitted/received, and when receiving the PDCCH, the UE may perform DL reception or UL transmission according to instructions. In the case of UL transmission of the UE, the UE in a sleep mode may wake up and transmit a scheduling request (SR) to the BS when there is data to be transmitted in a UL buffer, regardless of C-DRX. In the case of a UE in an idle mode, the UE may periodically perform paging monitoring and operate in idle mode DRX (I-DRX), which enters sleep mode again when the UE is not a target UE. Here, an operation of a sleep mode of the UE may refer to "irrelevant to an active time determined by the C-DRX" or the "period other than the active time determined by the C-DRX". The DRX cycle means that a duration including an ON duration (or active duration) and an OFF duration (or inactive duration) is repeated in a C-DRX operation. The length of the DRX cycle may be defined as from a start point of the ON duration to a next ON duration and may be divided into a long-DRX cycle and a short-DRX cycle. When the length of the DRX cycle is long, the BS needs to wait until the next ON duration of the UE when a PDSCH is generated immediately after an end of a specific ON duration of the UE, which may increase delay. In terms of the BS, the UE may not transmit periodic (P)-CSI or sounding reference signal (SRS) during the OFF duration, and thus the resource (resources for P-CSI or SRS transmission) may be allocated to other UEs to increase resource utilization. The BS may switch to an energy saving mode to save power during the OFF duration of the UE.

The long-DRX cycle and the short-DRX cycle may be configured at the same time. In this case, the long-DRX cycle needs to be configured to an integer multiple of the short-DRX cycle (here, onDurationTimer values between the Long-DRX cycle and the short-DRX cycle may be the same). When there is no data activity during the ON duration of the long-DRX cycle (for example, when there is no PDCCH reception), an operation may be performed in the long-DRX cycle. On the other hand, when there is data activity, the operation may be performed in the short-DRX cycle while a preset timer (drx-Shortcycle Timer) is operated, and when there is no data activity in the ON duration of the short-DRX cycle, the cycle may be converted to the long-DRX cycle again. In this case, start of the ON duration in the short-DRX cycle may be determined by the drx-StartOffset and drx-SlotOffet values, as in the long-DRX cycle.

The BS may instruct the UE, through the DRX command MAC CE, not to operate in an active mode until the end of the ON duration but to immediately enter a DRX sleep mode. That is, the BS may instruct the UE to end the current active duration and immediately enter the DRX cycle. When only the long-DRX cycle is configured for the UE, the UE may operate in the long-DRX cycle (according to instructions of the DRX command MAC CE). When both the long-DRX cycle and the short-DRX cycle are configured, the UE may operate in the short-DRX cycle mode immediately after receiving the DRX command MAC CE. When the BS indicates the long DRX command MAC CE, the UE may operate in the long-DRX cycle mode even if the short-DRX cycle is configured.

The BS may adjust/change a start point of the long-DRX cycle through RRC parameter *drx-LongcycleStartOff-*

*set.* In this case, a value of the *drx-LongcycleStartOffset* maybe defined to start the long-DRX cycle in a slot boundary in ms units. A start point of the ON duration may be configured to slot level granularity through another RRC parameter drx-SlotOffset. In this case, a relative position of the ON duration may be defined by applying as lot offset indicated from a reference point indicated by *LongcycleStartOffset.*

The UE may only wake up in the ON duration through the C-DRX configuration and monitor presence or absence of the PDCCH transmitted to the UE, and thus achieve ES compared to continuous monitoring of PDCCH (e.g., for each slot). When the BS has no data to be transmitted in an (upcoming) ON duration of the UE, a battery of the UE may be further saved by notifying a user that there is no need to wake up in the ON duration by transmitting WUS before the ON duration of the UE starts (i.e., there is no need to start an onduration timer). Here, when the BS has no data to be transmitted/received in the upcoming ON duration from among UEs for which C-DRX is configured, the BS may transmit WUS to be transmitted in DCI format 2_6 at a WUS occasion configured before the ON duration to indicate to the UE that the UE does not need to wake up in the ON duration. The UE receiving the WUS instructions may be maintained when a sleep mode is to be maintained without switching to an active mode.

Hereinafter, configuration of DTX (cell DTX) and/or DRX (cell DRX) for the BS/cell and an operation of the BS/cell/UE based thereon will be described in detail. The BS/cell may previously provide configuration information for the cell DTX and/or cell DRX to the UE. In this case, the UE may recognize/specify the DTX/DRX active duration and inactive duration of the BS/cell based on the configuration information for the cell DTX and/or cell DRX.

**1. [Method 1] Method of configuring ON/OFF duration of specific signal/channel and method of exceptionally allowing transmission/reception even if an OFF duration is configured when cell DTX configuration is configured in a cell (or cell group) and operates with periodic repetition of an active period and an inactive period**

The cell DTX/DRX has a similar structure to C-DRX of the UE and may have an active duration for transmitting/receiving all signals and channels without restrictions and a non-active duration. Here, in the inactive duration, transmission/reception of all signals and channels may be turned off, or transmission/reception of only specific signals and channels may be restrictedly performed. For example, an inactive duration (limited transmission/reception of specific signals and channels) may be restrictedly allowed to only PDCCH transmission (or reception) or reception (or transmission) of RACH/SR PUCCH in duration other than an active duration. cell DTX configuration and cell DRX configuration may be configured independently from each other. In this case, cell DTX only or cell DRX only may be configured, or both cell DTX configuration and cell DRX configuration may be configured. The cell DTX/DRX configuration may be configured and activated only by RRC signaling, or some parameters (of cell DTX/DRX configuration) may be configured via RRC, and the other parameters may be configured/instructed and activated through L1/L2 signaling (e.g. (group-common) DCI/MAC-CE). Information about the location and length of the active duration and inactive duration of the cell DTX/DRX may be pre-configured through specific RRC parameters. For example, a start point of the active duration may be configured through an offset based on a specific subframe boundary or a specific SFN value, and a duration of the active duration may be configured through a parameter (or a timer) related to the length. In this case, a method of pre-configuring a plurality of parameter or timer candidates or indicating one of the candidates when (an active duration) is activated through L1/L2 signaling may also be considered. In the cell DTX/DRX active duration, it may be possible to transmit/receive all signals and channels without any special transmission/reception restrictions in the same way as a normal operation of the BS. A duration other than the active duration may be basically be regarded as an inactive duration, and the inactive duration may have restrictions on transmission/reception other than preset signals and channels. Through this operation of performing only minimal transmission/reception (in an inactive duration), the BS may obtain ES gain and consider the operation as an operation when NES state/mode=ON is indicated.

**(1) [Method #1-A] Method in which BS configures OFF period of TRS signal when cell DTX is configured or configures signal to be effective only around SSB or immediately before active period**

A time-frequency tracking RS (TRS) of NR may be a reference signal (RS) to be used for time/frequency synchronization, similar to CRS in LTE. The CRS is an Always ON signal, but the TRS is configurable, and thus transmission may be turned ON/OFF. TRS-burst may be a minimum transmission unit of the TRS and may be transmitted periodically with a length of 2 slots below 6 GHz and 1 slot (or 2 slots) above 6 GHz. In terms of the BS, the BS may not enter an NES/sleep mode for periodic TRS transmission or may only stay in the NES/sleep mode for a short time, and thus a method of saving energy by configuring/instructing TRS transmission to be OFF during the inactive period of cell DTX may be considered. Therefore, when cell DTX is configured on a cell or cell group basis, a valid period of TRS transmission may be configured by also configuring whether TRS transmission is OFF in the inactive period or configuring a separate TRS ON/OFF pattern. For example, when TRS transmission is configured to always be OFF during the cell inactive duration, a UE in a connected mode may not expect to receive the TRS during the cell DRX inactive duration. The TRS ON/OFF pattern may be included and configured in the cell DTX configuration or may be configured differently from the activation/deactivation pattern of cell DTX. Multiple TRS ON/OFF patterns may be pre-configured, and a specific pattern may be indicated/activated through group-common DCI or MAC-CE.

Alternatively, a duration/pattern in which transmission of the TRS signal is ON/OFF may be configured by considering the active and inactive periods of cell DTX. For example, the BS may always periodically transmit signals that are important for a cell operation, such as SSB for inactive/idle UEs, regardless of cell DTX, and thus the BS may be configured to transmit the TRS in or around a transmission duration for transmission of the SSB by using a duration in which the BS needs to wake up anyway. For example, the TRS may be configured to be FDMed and transmitted in the same slot as a slot in which the SSB is transmitted or may be configured to be transmitted up to a slot before and after the slot in which the SSB is transmitted (or only in the slot immediately before transmission of the SSB). Alternatively, the TRS may be transmitted only in symbols immediately before and after a symbol in which the SSB is transmitted and may be OFF (e.g., OFF of TRS transmission) in the other symbols. As another method, a slot period itself in which the TRS is transmitted may be configured. For example, an interval at which the TRS is transmitted may be configured to 2 ms from start of the SSB slot, and the UE may assume that the TRS configured within the interval is valid even in an inactive period of cell DTX.

When the BS configures an OFF duration of the TRS, the BS may always configure the OFF duration of the TRS shorter than the cell DTX inactive period in consideration of idle/inactive UEs. For example, the BS may start TRS transmission X symbols before end of the inactive period and start of the active period (X may be configured together when the TRS OFF period is configured), and the UE may also start receiving the TRS from that point (e.g., X symbols before the active period).

Characteristically, the UE may blindly use the TRS at the locations of periodic specific synchronization signals (SSs). When PDCCH decoding is successful (and/or PDSCH scheduling is confirmed), the TRS (configured near the corresponding PDCCH) may be transmitted/received. Alternatively, when the UE transmits RACH (or PRACH, Msg A, Msg 1), the UE may assume that at least a TRS for the location of the RAR (e.g., configured near the PDCCH scheduling the RAR) is to be transmitted. Here, near the PDCCH may mean a duration from X ms (or slot or subframe) before reception of the PDCCH to reception of the PDCCH, and the X value may be predefined or a value configured by the BS.

## (2) [Method #1-B] Method of (dynamically) indicating/configuring period in which PRS transmission is OFF separately from (semi-static) PRS muting pattern

In the case of a PRS signal for NR positioning, a method of configuring an PRS muting pattern for receiving a PRS signal transmitted from another transmission and reception point (TRP) to a bitmap while the same time-frequency resource is shared in a predetermined scenario (NR Rel-16) may be introduced. In this regard, a PRS OFF period may be dynamically indicated by the inactive period of the cell DTX configuration separately from the semi-statically configured PRS muting pattern to save energy of the BS. In this case, when the PRS is configured/instructed to always be OFF in the inactive period of cell DTX, the UE may expect that the BS does not transmit the PRS when an unmuted period overlaps an inactive period of the cell DTX pattern even in an unmuted period on the PRS muting pattern. Accordingly, it may be efficient to instruct the cell DTX activation/deactivation pattern and the PRS muting pattern to be aligned as much as possible to ensure a duration in which the PRS is transmitted as much as possible. For example, when only a combination of the PRS muting pattern and the inactive period of the cell DTX pattern (of the serving cell) is considered, there may be an additional period in which the PRS is not transmitted only for a certain portion of the PRS unmute period. However, when the cell DTX pattern of a neighbor cell is considered, a situation may arise in which (all or part of) the unmuted duration \in the PRS muting pattern is muted. Therefore, the BS needs to additionally configure/instruct a period in which the PRS is muted by the cell DTX inactive period in consideration of the PRS muting pattern.

The PRS may be received from both a serving cell and a neighbor cell. Accordingly, the BS may configure/instruct to turn OFF only a part of the PRS, not the entire PRS, even if the serving cell and the neighbor cell are the same cell (in the cell DTX inactive period) in consideration of the case in which the neighbor cell is muted. For example, a structure in which the PRS is currently configured through an LTE positioning protocol (LPP) message may be made in units of TRPs, and each configuration may include an indicator indicating whether or not each configuration is affected by DTX. In detail, when multiple configurations are configured for the PRS muting pattern through an LTE positioning protocol (LPP) message, whether or not each configuration is affected by DTX (or DTX pattern) may be additionally configured. When specific (PRS muting pattern) configuration #1 is configured to be affected by DTX, the PRS linked to the specific configuration #1 may be additionally muted even during the DTX inactive period. Conversely, when specific configuration #2 is configured to not be affected by DTX (or DTX pattern), the PRS linked to the specific configuration #2 may be muted (according to specific configuration #2 above) regardless of the DTX inactive period.

## (3) [Method #1-C] Method in which PDCCH scrambled with C-RNTI is configured to be OFF during the cell DTX inactive period but is temporarily ON in exceptional situations (BFRQ or CFRA)

To save energy as much as possible, the BS may be configured to turn OFF transmission of the PDCCH scrambled with C-RNTI in the inactive duration while the cell DTX operation. However, even in the cell DTX inactive duration, reception of the signal/channel transmitted by the UE is still possible, and thus PDCCH transmission (related to the channel) may be temporarily required exceptionally even in the cell DTX inactive period (the specific signal/channel) depending on the specific signal/channel transmitted by the UE. For example, an exceptional situation may be when the UE transmits a UL signal/channel (e.g., RACH, PRACH, Msg A, and Msg 1) for a beam failure recovery request (BFRQ) or contention-free RACH procedure (CFRA) procedure. In other words, when receiving a UL signal/channel for a BFRQ or CFRA procedure from the UE, the BS may exceptionally transmit the PDCCH related to the UL signal/channel or the responding PDCCH to the UE even in the cell DTX inactive duration (transmission of PDCCH is configured to be OFF). In this case, the UE may expect to receive the PDCCH (Msg 2, Msg 4, or Msg B) and thus perform monitoring of the C-RNTI (or PDCCH scrambled with C-RNTI) in the cell DTX inactive duration.

In particular, the case in which signals/channels related to exceptional BFRQ are transmitted may include i) the case in which the UE transmits a BFRQ RACH in the cell DTX active duration and then enters the cell DTX inactive period or ii) the case in which the UE transmits a BFRQ RACH (or PRACH for BFRQ or Msg A) within the cell DTX inactive period. In these two cases, the UE may expect to receive the PDCCH in the cell DTX inactive period (after BFRQ RACH transmission) and perform monitoring of C-RNTI (or PDCCH scrambled with C-RNTI). When transmission (RACH or PRACH for CFRA or Msg A) is instructed to the UE through a PDCCH order, the contention free RACH procedure (CFRA) may be performed. In this case, when the BS receives the RACH (or PRACH or Msg A) transmitted by the UE before the cell DTX inactive period or the cell DTX inactive period, PDCCH transmission in the BS may be exceptionally allowed in the BS. In this case, when the BS may transmit the RACH (or PRACH or Msg A) (related to CFRA) and then expect to receive the PDCCH responding to the RACH. In this case, the UE may monitor C-RNTI (or PDCCH scrambled with C-RNTI) even during the inactive duration of cell DTX. Here, monitoring of the C-RNTI (or PDCCH scrambled with C-RNTI) within the inactive period of cell DTX may be performed limitedly only on a common search space (CSS) or a specific type CSS (e.g., CSS sets other than Type 1-PDCCH CSS set or Type-3 PDCCH CSS set from among a plurality of types of CSS sets defined in Table 3) rather than a UE specific search space (USS).

When the BS receives an SR PUCCH from the UE, the BS may exceptionally transmit the PDCCH related to the SR PUCCH or the responding PDCCH to the UE even in the cell DTX inactive duration (transmission of the PDCCH is configured to be OFF). Details related to this are described in detail in Method #3-A.

Characteristically, when transmission of the PDCCH scrambled with C-RNTI is turned OFF without exception (i.e., when transmission of the PDCCH is not always performed within the cell DTX inactive period), a CFRA resolution timer may be extended/held until the C-RNTI (or PDCCH scrambled with C-RNTI) in a next cell DTX active period or may be configured to have a larger timer value. Alternatively, the UE may disregard the timer (or CFRA resolution timer) even if the timer expires or may reset the timer (or CFRA resolution timer) and then run again in the next cell DTX active period. The UE may perform monitoring on C-RNTI (or PDCCH scrambled with C-RNTI) for CFRA and BFRQ procedures in the next cell DTX active period.

## 2. [Method #2] Switching operation method between NES mode and non-NES mode of BS when cell DTX/DRX is configured and inactive durations and active durations are periodically repeated

As described above, the BS operating in a NES mode for ES means an operation in which the BS pre-configures a plurality of OFF durations (DTX inactive duration of the BS), in which transmission of a specific DL signal is turned off for a specific duration, and dynamically indicates one of the OFF durations to indicate that a corresponding DL signal is not transmitted for a predefined duration, thereby reducing power consumption of the BS and the UE. An operation in an NES mode may refer to an operation mode in which the BS does not perform transmission and/or reception not only in the time domain but also in the frequency domain and the spatial domain to reduce power consumption of the BS and the UE. For example, the BS may not perform transmission and/or reception of a signal/channel through BWP switching and dynamic resource block (RB) adaptation in the frequency domain, or may semi-statically or dynamically turn off a specific reception antenna port of the BS in the spatial domain and may not perform transmission and/or reception of a signal/channel through the turned-off antenna port.

In the inactive duration of cell DTX or cell DRX of the BS, specific signals and channels may be pre-configured/instructed to be OFF. Therefore, as described above, a duration in which the NES mode and the non-NES mode of the BS are switched and instructed needs to be pre-configured. Only a single cell DTX or a single cell DRX may be configured in the cell, but a plurality of cell DTX and a plurality of cell DRXs may be configured, and thus whether or not switching and instructions of the NES mode and the non-NES mode are performed only in the specific cell DTX or the cell DRX configuration may be pre-configured.

## (1) [Method #2-A] Method of allowing switching and instructions between the NES mode and the non-NES mode of the BS only during the active duration of cell DTX or cell DRX in the cell (or cell group) and configuring an operation only in the NES mode in the inactive period

**(2) [Method #2-B] Method of previously allowing switching and instructions between the NES mode and the non-NES mode of the BS only specific cell DTX configuration or cell DRX configuration when a plurality of cell DTXs or a plurality of cell DRXs are configured in cell (or cell group)**

For example, when cell DTX is configured with cell DTX configurations #1, #2, and #3 for a cell/BS and cell DRX configurations #1 and #2 are configured, switching and instructions between the NES mode and the non-NES mode of the BS may be allowed only for cell DTX configuration #1. Alternatively, as in method #2-A, switching and instructions between the NES mode and the non-NES mode of the BS for cell DTX configuration #1 may be allowed only during the active duration of cell DTX configuration #1.

**(3) [Method #2-C] Method of considering that the BS operates in the non-NES mode in the active duration and the BS operates in the NES mode in the inactive duration without separate configuration/instructions and explicitly configuring/instructing whether the UE performs transmission/reception or the BS performs an operation in NES mode when the active duration and the inactive duration of cell DTX or cell DRX are configured**

**(4) [Method #2-D] Method of operating in the pre-linked NES mode for each of cell DTX and cell DRX configurations when multiple cell DTX and cell DRX are configured**

For example, cell DTX configuration #1 and NES mode #1 (16 antenna ports (APs) in the spatial domain and PRS and TRS OFF in the inactive duration of the time domain) may be pre-linked and configured. In addition, cell DRX configuration #2 and NES mode #2 (8 APs in the spatial domain and periodic/semi-persistent CSI report on PUCCH OFF in the inactive duration of the time domain) may be pre-linked and configured. In this case, when cell DTX configuration #1 is switched to cell DRX configuration #2, the current mode may be automatically switched to the pre-linked/related NES mode (e.g., automatically switch from NES mode #1 to NES mode #2).

**(5) [Method #2-E] Method of assuming that a slot in which a broadcast signal/channel is transmitted like SSB/ SIB or a slot in which RACH is transmitted is in a non-NES mode even if the current duration is a duration configured as an inactive duration without separate configuration/instructions when the active duration and the inactive duration of cell DTX and cell DRX are configured**

In Methods #2-A/B/C/D/E, the parts described as cell DTX or cell DRX may be replaced with UE C-DRX. For example, a plurality of UE C-DRXs may be configured with UE C-DRX configuration #1, configuration #2, and configuration #3. Here, UE C-DRX configuration #1 may be a configuration in which a legacy UE C-DRX operation is performed. The UE C-DRX configuration #2 and configuration #3 are each a configuration in which the BS instructs the UEs within the cell to switch DRX configurations to group-common DCI or MAC-CE when the BS operates in cell DTX and may refer to a UE C-DRX configuration to be used to implement an active/inactive duration of cell DTX or cell DRX by aligning ON/OFF durations between the UEs.

### SR-related behavior based on cell DTX-DRX configuration

Hereinafter, a limited DTX/DRX operation, which achieves an energy saving effect but allows limited transmission/reception only under a certain condition by configuring/instructing transmission/reception of a specific signal/channel to be OFF in a specific duration (i.e., inactive duration) through a cell (-specific) DTX/DRX operation of the BS and a transmission/reception method of the UE at this time (in particular, a UE operation related to SR transmission) will be described in detail.

**[Method #3] Transmission/reception operation method of SR and SRS related E according to cell DTX/DRX configuration**

The cell DTX/DRX has a similar structure to C-DRX of the UE and may have an active duration for transmitting/receiving all signals and channels without restrictions and a non-active duration. Here, in the inactive duration, transmission/reception of all signals and channels may be turned off, or transmission/reception of only specific signals and channels may be restrictedly performed. For example, an inactive duration (limited transmission/reception of specific signals and channels) may be restrictedly allowed to only PDCCH transmission (or reception) or reception (or transmission) of RACH/SR PUCCH in duration other than an active duration. cell DTX configuration and cell DRX configuration may be configured independently from each other. In this case, cell DTX only or cell DRX only may be configured, or both cell DTX configuration and cell DRX configuration may be configured. The cell DTX/DRX configuration may be configured and activated only by RRC signaling, or some parameters (of cell DTX/DRX configuration) may be configured via RRC signaling, and the other parameters may be configured/instructed and activated through L1/L2 signaling (e.g. (group-common) DCI/MAC-CE). Information about the location and length of the active duration and inactive duration of the cell DTX/DRX may be pre-configured through specific RRC parameters. For example, a start point of the active duration may be configured through an offset based on a specific subframe boundary or a specific SFN value, and a duration of the active duration may be configured through a parameter (or a timer) related to the length. In this case, a method of pre-configuring a plurality of parameter or timer candidates or indicating one of the candidates when (an active duration) is activated through L1/L2 signaling may also be considered. In the cell DTX/DRX active duration, it may be possible to transmit/receive all signals and channels without any special transmission/reception restrictions in the same way as a normal operation of the BS. A duration other than the active duration may be basically be regarded as an inactive duration, and the inactive duration may have restrictions on transmission/reception other than preset signals and channels. Through this operation of performing only minimal transmission/reception (in an inactive duration), the BS may obtain ES gain and consider the operation as an operation when NES state/mode=ON is indicated.

Cell DTX and cell DRX may be configured independently, and thus only cell DTX or only cell DRX may be operated, or cell DTX and DRX may be applied at the same time. The BS may configure/instruct (to the UE) the signal/channel on which transmission/reception is to be OFF in the inactive duration of cell DTX or cell DRX for each DL/UL signal. For example, DL signals such as PRS or TRS may be configured to be OFF in an inactive duration in the cell DTX configuration. Alternatively, periodic/semi-permanent CSI reporting may be OFF in an inactive duration according to the cell DRX configuration.

When cell DTX only is configured to save energy, the BS may also configure the PDCCH scrambled with C-RNTI as a DL signal to be OFF in during the inactive duration. In this case, even if the BS is capable of receiving a UL signal/channel transmitted by the UE, a DL signal/channel to be transmitted in response to the UL signal/channel of the UE due to the cell DTX configuration (in the inactive duration) may be configured to be OFF. In this case, the BS needs to wait for transmission of the DL signal/channel until the DL signal/channel is transmitted in the next active duration, thereby increasing delay. In this case, the BS may not provide a response to the UL signal/channel transmitted by the UE due to cell DTX configuration, and thus the UE may not perform the PDCCH monitoring. Alternatively, the UE may continuously and repeatedly transmit a UL signal/channel as defined in a predetermined scenario even in a situation in which the UE transmits the UL signal/channel and does not receive a response of the BS (or a situation in which the BS may not transmit the PDCCH). Such repetitive transmission may be inefficient in terms of power saving of the UE. For example, when the UE transmits an SR PUCCH, if there is no response while the UE expects to receive a PDCCH scrambled with C-RNTI and performs monitoring, the UE may continuously and repeatedly transmit the SR PUCCH until a counter value reaches a preset max value.

Hereinafter, methods for resolving a problem of repetitive transmission of the above-described UL signal/channel will be described in detail. As described above, the description will be given assuming that the BS pre-transmits cell DTX configuration and/or cell DRX configuration to the UE.

### (1) [Method #3-A] Method of turning ON PDCCH monitoring after transmitting SR in the inactive period of cell DTX

In Method #3-A, when the UE transmits an SR in an inactive duration of cell DTX, the UE may exceptionally turn ON PDCCH monitoring for the SR even during the inactive duration. For example, when cell DTX only (or cell DTX and cell DRX) is performed and transmission of PDCCH scrambled with C-RNTI is turned OFF in the inactive duration of cell DTX, the UE may transmit the UL signal/channel in the inactive duration. In this case, when the UL signal/channel is an SR PUCCH, the UE may perform monitoring on a PDCCH (e.g., PDCCH including a UL grant) scrambled with a C-RNTI responding to the SR PUCCH even during the inactive duration. On the other hand, when the UL signal/channel is not the SR PUCCH (or not RACH based on BFRQ or CFRA), the UE may not monitor the DL signal responding to the UL signal/channel in the inactive period of the cell DTX.

Here, monitoring of exceptional C-RNTI (or PDCCH scrambled with -RNTI) within the inactive duration of cell DTX may be performed limitedly only on a common search space (CSS) or a specific type CSS (e.g., CSS sets other than Type 1-PDCCH CSS set or Type-3 PDCCH CSS set from among CSS sets defined in Table 3) rather than a UE specific search space (USS).

### (2) [Method #3-B] Method of turning ON transmission of (periodic and/or semi-persistent) SRS in an inactive duration of cell DTX or cell DRX when transmission of the SRS is configured/instructed to be OFF but the UE transmits SR in the inactive duration of cell DTX or cell DRX

The BS may configure/instruct the UE to turn OFF SRS transmission of the UE in the inactive duration of cell DTX or cell DRX. However, when the UE transmits an SR, the BS needs to schedule the PUSCH to the UE through a UL grant. In this regard, the BS may turn ON transmission of periodic/semi-periodic SRS that is configured/instructed to be OFF in the inactive duration of cell DTX or cell DRX when the SR is received from the UE to obtain UL channel information. In this case, the SRS may be pre-defined in the specifications to turn ON the SRS after transmission of the SR (in the inactive duration), or the BS may pre-configure whether the SRS is ON to the UE via RRC or may dynamically indicate whether the SRS is ON via DCI.

**(3) [Method #3-C] Method of turning ON SR transmission in cell DTX only and in inactive period of cell DTX (when transmission of PDCCH scrambled with C-RNTI is configured to be OFF) but turning OFF transmission of cell DTX SR in the inactive duration when cell DTX and DRX are simultaneously configured and applied (when transmission of SR is configured to be OFF in the inactive duration of cell DRX)**

Characteristically, in Method #3-C, when cell DTX and cell DRX are configured/applied at the same time and the current duration is both an inactive duration of cell DRX and an inactive duration of cell DTX (i.e., the inactive duration of cell DRX and the inactive duration of cell DTX overlap each other), the SR transmission may be turned OFF. When cell DTX and cell DRX are configured at the same time and the current duration is the inactive duration of cell DRX or the inactive duration of cell DTX (when the inactive duration of cell DRX and the inactive duration of cell DTX do not overlap each other), SR transmission may be OFF or ON. For example, even if the current duration is not the inactive duration of cell DRX, when the current duration is the inactive duration of cell DTX, the UE may not receive DCI even if the UE transmits SR, and thus SR transmission may be OFF. Alternatively, when the current duration is not the inactive duration of cell DRX (that is, when the current duration is an active duration of cell DRX and an inactive duration of cell DTX), SR transmission may be ON. This is because the BS is capable of transmitting DCI immediately when the inactive duration of cell DTX is converted to an active duration.

**(4) [Method #3-D] Method of transmitting SR RACH instead of SR PUCCH (C-RNTI monitoring is exceptionally ON in the inactive duration)**

Previously, SR RACH may be switched and transmitted only when an SR counter value reaches a max value. However, in Method #3-D, the UE may transmit SR RACH even if the SR counter value does not reach the max value during the inactive duration of cell DRX.

**(5) [Method #3-E] Method of transmitting SR PUCCH after the active duration of the next cell DTX (C-RNTI monitoring is OFF in the inactive duration)**

According to a predetermined scenario, when the UE transmits the SR PUCCH and does not receive a PDCCH in response, the UE may repeatedly attempt to transmit the SR PUCCH while increasing the counter value up to the configured sr-TransMax value. When a short SR period is configured, sr-ProhibitTimer may be operated to prevent unnecessary SR retransmission. In a situation in which cell DTX and/or cell DRX configurations are applied, the operations of the existing SR transmission counter and prohibit timer may be modified based on periodically repeated active durations and inactive durations.

Alternatively, a method of considering the SR PUCCH (SR PUCCH resource) allocated to the inactive duration of cell DTX or the inactive duration of cell DRX as an invalid PUCCH resource may also be considered. In the case of an invalid PUCCH, the SR transmission may not occur, and thus only the SR PUCCH for the active duration may be naturally used for actual transmission. Alternatively, similar to SPS HARQ-ACK deferral, the SR to be transmitted may be deferred to the next SR PUCCH resource.

**(6) [Method #3-F] Method of transmitting SR PUCCH in the inactive duration of cell DTX but not increasing counter value**

Method #3-F may be applied only when the BS does not perform the cell DRX operation. In this case, the UE may expect the BS to transmit the UL grant as soon as the BS receives the SR and the inactive duration ends. In other words, when transmitting SR PUCCH in the inactive duration of cell DTX, the UE may increase the counter value as before and waits until the inactive duration of cell DTX of the BS ends without transmitting the SR PUCCH. Alternatively, a method in which the UE does not transmit SR PUCCH and does not increase the counter value during the inactive duration may be considered.

**(7) [Method #3-G] Method of not transmitting SR PUCCH in the inactive duration but increasing counter value**

In the case of Method #3-G, the counter value is the same as the existing standard operation, and thus the UE may trigger RACH transmission (or transmission of SR RACH) when the counter value reaches the preset sr-TransMax value. Alternatively, when the cell DTX configuration is applied, a new counter that is separate from the existing SR transmission counter may be introduced/defined. In this case, all or part of SRS/PUCCH/CG-PUSCH/SP-PUSCH for CSI reporting may not be released even if the new counter reaches the max value.

When Method #3-G is considered in terms of a layer, the MAC layer still determines that the current channel is a valid PUCCH, increases the counter value, and instructs SR transmission to a PHY layer, but the PHY layer may not transmit the SR PUCCH or the MAC layer may consider an invalid PUCCH and increase the counter value even if SR transmission is not indicated to the PHY layer. In other words, the MAC layer may determine that the SR PUCCH resource is valid and increases the counter value while instructing the PHY layer to transmit SR but the PHY layer may not transmit SR during an inactive duration (DTX or DRX). Alternatively, the MAC layer may increase the counter value in the case of an inactive duration (DTX or DRX) even if it is determined that the SR PUCCH resource is invalid. In this case, the SR RACH transmission may be triggered even if the SR transmission is not performed up to the maximum value of the counter value, thereby minimizing power consumption of the UE.

**(8) [Method #3-H] Method in which SR/SRS in the inactive duration of cell DRX (Methods in which SR is not transmitted, which are stated in Method #3-A to Method #3-F, are applicable) and SR/SRS is transmitted in the active period and when Cell DRX is not configured (Methods of transmitting SR, which are mentioned in Method #3-A to Method #3-F are applicable)**

However, in this case, each SR and SRS may be transmitted independently.

**(9) [Method #3-I] Method of holding an SR prohibit timer in the inactive duration of cell DRX and then resuming or resetting/restarting the SR prohibit timer in the active duration of cell DRX**

In Method #3-I, when the UE enters the inactive duration of cell DRX from the active duration of cell DRX, the UE may hold a value of the SR prohibit timer that currently runs in the inactive duration (at the end of the active duration of cell DRX). Then, when the UE enters the active duration of cell DRX, the SR prohibit timer may be resumed or reset/restarted altogether. Accordingly, the value of the SR counter (at the end of the active duration of cell DRX) may also be maintained at the same value (without increasing) during the inactive duration.

**(10) [Method #3-J] Method of configuring/applying the SR prohibit timer and the SR counter value differently for each period (active or inactive of cell DRX (or cell DTX))**

For example, the SR prohibit timer in the active duration of cell DRX (or cell DTX) and the SR prohibit timer used in the inactive duration of cell DRX (or cell DTX) may be defined separately. In this case, a larger value may be configured/applied to the SR prohibit timer in the inactive duration of cell DRX (or cell DTX) than the SR prohibit timer in the active duration of cell DRX (or cell DTX). The value of the SR prohibit timer may be configured to match or be larger than a value of the inactive duration of cell DRX (or cell DTX).

**(11) [Method #1-K] Method of holding or resetting SR prohibit timer/SR timer value at the end of the active duration of the immediately preceding cell DRX (or cell DTX) when the SR is also OFF in the inactive duration of cell DRX (or cell DTX) and transmission is not possible**

The held SR prohibit timer/SR timer is maintained in a hold state until the inactive duration of cell DRX (or cell DTX) ends and may then be resumed again in the active duration of cell DRX (or cell DTX). When the SR prohibit timer/SR timer is reset, the SR prohibit timer/SR timer may be reset repeatedly such that the SR prohibit timer/SR timer does not expire or reach a max value during the inactive duration of cell DRX (or cell DTX).

Characteristically, the influence of the cell DTX operation of the BS may be considered in a time alignment timer (TAG) timer, similar to the SR timer. For example, conventionally, when the TAG expires even without data, SR RACH transmission is triggered, but a method in which SR RACH transmission is not triggered even when the TAG timer expires in the inactive duration of cell DTX may be considered.

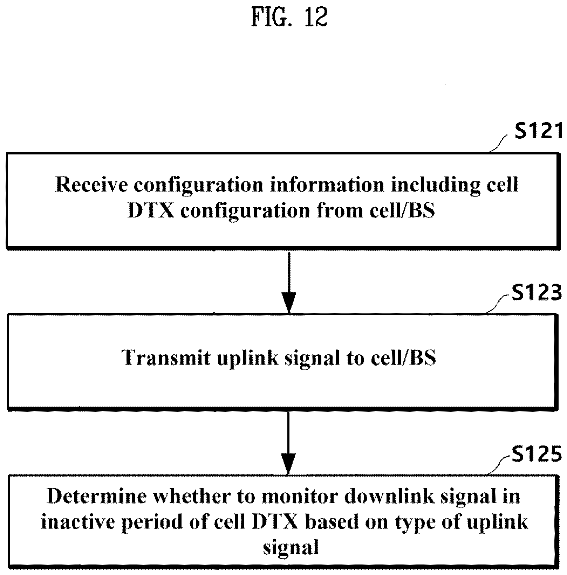

FIG. 12 is a diagram to explain a method of monitoring a downlink signal by a UE.

Referring to FIG. 12, the UE may receive configuration information including cell discontinuous transmission (DTX) configuration from the cell/BS (S121). As described above, the cell DTX configuration may include information about an active duration in which downlink transmission of the cell/BS is possible (ON) and an inactive duration in which downlink transmission is not possible (OFF). Alternatively, the cell DTX configuration may further include information about a type of downlink signal/channel that is not transmitted in the inactive duration. For example, the cell DTX configuration may also include information for configuring PRS, TRS, and/or PDCCH scrambled with C-RNTI, as a downlink signal of which transmission is OFF in the inactive duration. The configuration information may further include a cell discontinuous reception (DRX) configuration related to the cell. As described above, the cell DTX configuration may include information about an active duration in which uplink reception of the cell/BS is possible (ON) and an inactive duration in which uplink reception is not possible (OFF). As described above, the cell DTX configuration and the cell DRX configuration may be configured independently from each other, and only the cell DTX configuration or the cell DTX configuration may be applied/configured for the cell/BS.

Then, the UE may transmit an uplink signal to the cell/BS (S123). The UE may transmit the uplink signal when the current duration is not an inactive duration of the cell DRX based on the configuration information. Alternatively, the UE may transmit the uplink signal for a specific uplink signal type even during the inactive duration of the cell DRX. For example, when the UE transmits RACH (or PRACH, Msg 1 or Msg A including PRACH) related to BFRQ or CFRA to the cell/BS, the UE may transmit the uplink signal (PRACH and/or MSG A) even in the inactive duration of the cell DRX.

Then, the UE may determine whether to monitor a downlink signal in response to the uplink signal in an inactive period of the cell DTX based on a type of the uplink signal (S125). In detail, when the UE needs to receive a downlink signal in response to the uplink signal, the UE may monitor the downlink signal to receive the downlink signal in response to the uplink signal after transmission of the uplink signal. In the case of the inactive period of the cell DTX, the UE may not perform monitoring of the downlink signal in the inactive period of the cell DTX in principle and may perform monitoring of the downlink signal from a start point of the active period of the cell DTX after the inactive period of the cell DTX ends. However, as described above, for a certain predefined types of uplink signal (e.g., uplink signal triggered for BFRQ, uplink signals triggered for CFRA, or SR PUCCH), it may be possible to exceptionally transmit a downlink signal (e.g., PDCCH scrambled with C-RNTI) even in an inactive period of the cell DTX. Accordingly, when the UE transmits the specific type of uplink signal, the UE may perform monitoring of a downlink signal (e.g., PDCCH scrambled with C-RNTI) even during the inactive period of the cell DTX.

For example, based on that the uplink signal includes an uplink signal (e.g., Msg 1 or Msg A including RACH, PRACH, PRACH) for a random access channel (RACH) triggered for a beam failure recovery request (BFRQ) or a content-free RACH procedure (CFRA), the UE may perform monitoring of the downlink signal even during the inactive period of the cell DTX. Alternatively, based on that the uplink signal is a scheduling request (SR) physical uplink control channel (PUCCH), the UE may perform monitoring of the downlink signal even during the inactive period of the cell DTX. In this case, the UE may monitor the downlink signal only in a common search space (CSS) from a UE specific search space (USS) and the CSS. For example, even if the downlink signal in response to the uplink signal is a PDCCH scrambled with a cell radio network temporary identifier (C-RNTI), the UE may monitor whether the PDCCH scrambled with the C-RNTI is received in the CSS not the USS in the inactive period of the cell DTX. Alternatively, the CSS may be limited to a specific type of CSS through configuration/instructions of the BS/cell. For example, the specific type of CSS may be pre-configured/instructed as the remaining CSS set(s) excluding the Type 1-PDCCH CSS set or the Type-3 PDCCH CSS set from among the CSS sets described in Table 3.

For example, when the uplink signal is a RACH triggered for BFRQ or a RACH triggered for CFRA, the UE may perform monitoring for reception of a downlink signal (Msg 2, Msg 4 or Msg B) in response to the RACH in the inactive period of the cell DTX.

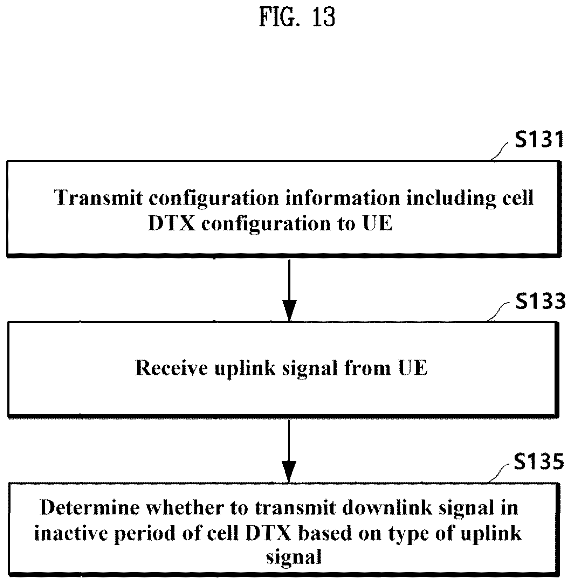

FIG. 13 is a diagram for configuring a method for a BS or a cell to transmit a downlink signal based on cell DTX.

Referring to FIG. 13, the BS may transmit configuration information including cell DTX configuration to the UE (S131). As described above, the configuration information may further include a cell DRX configuration related to the BS/cell.

Then, the BS may receive an uplink signal from the UE (S133). For example, the BS may receive an uplink signal from the UE when the cell DRX is not in an inactive period or when the cell DRX is not configured. As described above, the BS may exceptionally receive uplink signals (PRACH) based on RACH even during the inactive period of the cell DRX.

Then, in the case of an inactive period of the cell DTX, the BS may determine whether to transmit a downlink signal in response to the uplink signal in the inactive period of the cell DTX, based on a type of the uplink signal (S135). As described above, even if the BS needs to transmit a downlink signal in response to the uplink signal, when the current period is an inactive period of the cell DTX, the BS may transmit the downlink signal to the UE after the inactive period of the cell DTX ends (i.e., the BS enters the inactive period of the cell DTX) in principle. However, when the uplink signal is an uplink signal for a BFRQ or CFRA procedure (e.g., RACH, PRACH, Msg A, or Msg 1), the BS may exceptionally transmit a downlink signal (Msg 2, Msg B, or PDCCH scrambled with C-RNTI) in response to the uplink signal even during the inactive period of the cell DTX. Alternatively, when the uplink signal is SR PUCCH, the BS may exceptionally transmit a downlink signal (PDCCH scrambled with C-RNTI) in response to the uplink signal even during the inactive period of the cell DTX. As such, when a downlink signal is exceptionally transmitted in the inactive period of the cell DTX, the BS may transmit the downlink signal only in a common search space (CSS) from a UE specific search space (USS) and the CSS.

As such, the proposed disclosure may allow only transmission and reception of at least a specific channel/signal exceptionally in an inactive period even if cell DTX and/or cell DRX are applied, thereby saving energy while minimizing procedural delay due to application of cell DTX and/or cell DRX.

Alternatively, the proposed disclosure may minimize unnecessary power consumption of the UE by preventing repeated transmission of uplink signals based on a counter of an uplink signal of the UE for the inactive period of the cell DTX and/or the cell DRX.

## Communication system example to which the present disclosure is applied

Although not limited thereto, various descriptions, functions, procedures, proposals, methods, and/or operational flow charts of the present disclosure disclosed in this document may be applied to various fields requiring wireless communication/connection (5G) between devices.

Hereinafter, it will be illustrated in more detail with reference to the drawings. In the following drawings/description, the same reference numerals may exemplify the same or corresponding hardware blocks, software blocks, or functional blocks, unless otherwise indicated.

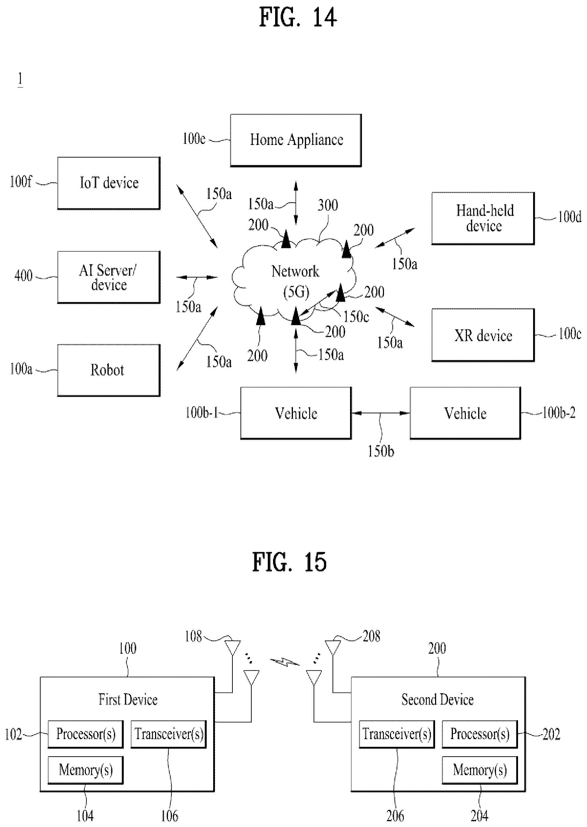

FIG. 14 illustrates a communication system applied to the present disclosure.

Referring to FIG. 14, a communication system 1 applied to the present disclosure includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/SG devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The handheld device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g. relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

## Examples of wireless devices to which the present disclosure is applied

FIG. 15 illustrates a wireless device applicable to the present disclosure.

Referring to FIG. 15, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 14.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information acquired by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

In detail, the first wireless device or UE 100 may include the processor 102 and the memory 104 connected to the transceiver 106. The memory 104 may include at least one program for executing operations related to the embodiments described in FIGS. 11 to 13.

The processor 102 may control the transceiver 106 to receive configuration information including a cell discontinuous transmission (DTX) configuration from a cell and transmit an uplink signal to the cell, and may determine whether to monitor a downlink signal in response to the uplink signal in the inactive period of the cell DTX based on the configuration information. Here, whether to monitor the downlink signal may be determined based on the type of the uplink signal.

Alternatively, a processing device including the memory 104 and the processor 102 configured to control the UE that monitors a downlink signal may be configured. In this case, the processing device may include at least one processor, and at least one memory connected to the at least one processor and configured to store instructions, and in this case, based on being executed by the at least one processor, the instructions may cause the UE to receive configuration information including a cell DTX configuration from a cell, transmit an uplink signal to the cell, and determine whether to monitor a downlink signal in response to the uplink signal in an inactive period of cell DTX determined based on the configuration information. Here, whether to monitor the downlink signal may be determined based on the type of the uplink signal.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information acquired by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

In detail, the second wireless device or BS 200 may include the transceiver or the processor 202 and the memory connected to the RF transceiver 206. The memory 204 may include at least one program for executing operations related to the embodiments described in FIGS. 11 to 13.

The processor 202 may control the transceiver 206 to transmit configuration information including cell discontinuous transmission (DTX) configuration from the UE and receive an uplink signal from the UE, and may determine whether to transmit a downlink signal in response to the uplink signal in the inactive period of the cell DTX based on the cell DTX configuration.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

**Examples of wireless devices to which the present disclosure is applied**

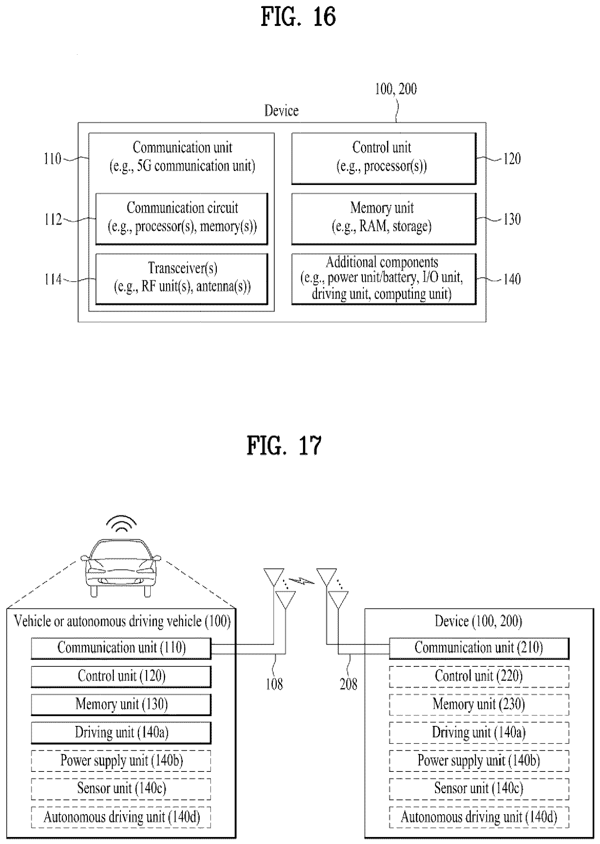

FIG. 16 illustrates another example of a wireless device applied to the present disclosure. The wireless device may be implemented in various forms according to a use-case/service (refer to FIG. 17).

Referring to FIG. 16, wireless devices 100 and 200 may correspond to the wireless devices 100 and 200 of FIG. 15 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 15. For example, the transceiver(s) 114 may include the one or more transceivers 106 and 206 and/or the one or more antennas 108 and 208 of FIG. 15. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 14), the vehicles (100b-1 and 100b-2 of FIG. 14), the XR device (100c of FIG. 14), the hand-held device (100d of FIG. 14), the home appliance (100e of FIG. 14), the IoT device (100f of FIG. 14), a digital broadcast terminal, a hologram device, a public safety device, an MTC device, a medicine device, a fintech device (or a finance device), a security device, a climate/environment device, the AI server/device (400 of FIG. 14), the BSs (200 of FIG. 14), a network node, etc. The wireless device may be used in a mobile or fixed place according to a use-example/service.

In FIG. 16, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

## Examples of vehicles or autonomous vehicles to which the present disclosure is applied

FIG. 17 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 17, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 16, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). Also, the driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the acquired data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly acquired data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

Here, wireless communication technologies implemented in the wireless devices (XXX, YYY) of the present specification may include LTE, NR, and 6G, as well as Narrowband Internet of Things for low power communication. At this time, for example, the NB-IoT technology may be an example of a Low Power Wide Area Network (LPWAN) technology, and may be implemented in standards such as LTE Cat NB1 and/or LTE Cat NB2, and is not limited to the above-described names. Additionally or alternatively, the wireless communication technology implemented in the wireless devices (XXX, YYY) of the present specification may perform communication based on LTE-M technology. In this case, as an example, the LTE-M technology may be an example of LPWAN technology, and may be referred to by various names such as eMTC (enhanced machine type communication). For example, LTE-M technology may be implemented in at least one of a variety of standards, such as 1) LTE CAT 0, 2) LTE Cat M1, 3) LTE Cat M2, 4) LTE non-BL (non-Bandwidth Limited), 5) LTE-MTC, 6) LTE Machine Type Communication, and/or 7) LTE M, and is not limited to the above-described names. Additionally or alternatively, the wireless communication technology implemented in the wireless devices (XXX, YYY) of the present specification is at least one of ZigBee, Bluetooth, and Low Power Wide Area Network (LPWAN) considering low power communication, and is not limited to the above-described names. As an example, ZigBee technology can generate personal area networks (PANs) related to small/low-power digital communication based on various standards such as IEEE 802.15.4, and may be called various names.

The embodiments described above are those in which components and features of the present disclosure are combined in a predetermined form. Each component or feature should be considered optional unless explicitly stated otherwise. Each component or feature may be implemented in a form that is not combined with other components or features. In addition, it is also possible to constitute an embodiment of the present disclosure by combining some components and/or features. The order of operations described in the embodiments of the present disclosure may be changed. Some configurations or features of one embodiment may be included in other embodiments, or may be replaced with corresponding configurations or features of other embodiments. It is obvious that the embodiments may be configured by combining claims that do not have an explicit citation relationship in the claims or may be included as new claims by amendment after filing.

In this document, embodiments of the present disclosure have been mainly described based on a signal transmission/reception relationship between a terminal and a base station. Such a transmission/reception relationship is extended in the same/similar manner to signal transmission/reception between a terminal and a relay or a base station and a relay. A specific operation described as being performed by a base station in this document may be performed by its upper node in some cases. That is, it is obvious that various operations performed for communication with a terminal in a network comprising a plurality of network nodes including a base station may be performed by the base station or network nodes other than the base station. The base station may be replaced by terms such as a fixed station, a Node B, an eNode B (eNB), an access point, and the like. In addition, the terminal may be replaced with terms such as User Equipment (UE), Mobile Station (MS), Mobile Subscriber Station (MSS).

In a hardware configuration, the embodiments of the present disclosure may be achieved by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, etc.

In a firmware or software configuration, a method according to embodiments of the present disclosure may be implemented in the form of a module, a procedure, a function, etc. Software code may be stored in a memory unit and executed by a processor. The memory unit is located at the interior or exterior of the processor and may transmit and receive data to and from the processor via various known means.

As described before, a detailed description has been given of preferred embodiments of the present disclosure so that those skilled in the art may implement and perform the present disclosure. While reference has been made above to the preferred embodiments of the present disclosure, those skilled in the art will understand that various modifications and alterations may be made to the present disclosure within the scope of the present disclosure.

[Industrial Availability]

The above-described embodiments of the present disclosure are applicable to various mobile communication systems.

**Claims**

**1.**  A method of monitoring a downlink signal by a user equipment (UE) in a wireless communication system, the method comprising:

receiving configuration information including a cell discontinuous transmission (DTX) configuration from a cell;
transmitting an uplink signal to the cell; and
determining whether to monitor a downlink signal in response to the uplink signal in an inactive period of cell DTX determined based on the configuration information,
wherein whether to monitor the downlink signal is determined based on a type of the uplink signal.

2. The method of claim 1, wherein, based on that the uplink signal is an uplink signal for a beam failure recovery request (BFRQ) or a contention-free Random Access Channel procedure (CFRA), the UE performs monitoring of the downlink signal even during the inactive period of the cell DTX.

3. The method of claim 1, wherein, based on that the uplink signal is a scheduling request (SR) physical uplink control channel (PUCCH), the UE performs monitoring of the downlink signal even during the inactive period of the cell DTX.

4. The method of claim 2 or 3, wherein, the UE performs monitoring of the downlink signal only in a common search space (CSS) from a UE specific search space (USS) and the CSS.

5. The method of claim 4, wherein the CSS is a specific type of CSS configured from the cell.

6. The method of claim 1, wherein, based on that the uplink signal is an uplink signal that is not related to a beam failure recovery request (BFRQ) or a contention-free Random Access Channel procedure (CFRA), the UE does not perform monitoring of the downlink signal in the inactive duration of the cell DTX.

7. The method of claim 1, wherein the configuration information further includes a cell discontinuous reception (DRX) configuration related to the cell, and
based on that the uplink signal is a scheduling request (SR) physical uplink control channel (PUCCH), the UE transmits a sounding reference signal (SRS) even during the inactive period of the cell DTX determined based on the cell DRX configuration.

8. The method of claim 1, wherein the downlink signal is a physical downlink control channel (PDCCH) scrambled with a cell radio network temporary identifier (C-RNTI).

9. A computer-readable recording medium having recorded thereon a program for executing the method of claim 1.

10. A user equipment (UE) for monitoring a downlink signal in a wireless communication system, the UE comprising:

a radio frequency (RF) transceiver; and
a processor connected to the RF transceiver,
wherein the processor controls the RF transceiver to receive configuration information including a cell discontinuous transmission (DTX) configuration from a cell and transmit an uplink signal to the cell, and determines whether to monitor a downlink signal in response to the uplink signal in an inactive period of cell DTX determined based on the configuration information, and
whether to monitor the downlink signal is determined based on a type of the uplink signal.

11. The UE of claim 10, wherein, based on that the uplink signal is an uplink signal for a beam failure recovery request (BFRQ) or a contention-free Random Access Channel procedure (CFRA), the processor performs monitoring of the downlink signal even during the inactive period of the cell DTX.

12. The UE of claim 10, wherein, based on that the uplink signal is a scheduling request (SR) physical uplink control channel (PUCCH), the processor performs monitoring of the downlink signal even during the inactive period of the cell DTX.

13. A processing device for controlling a user equipment (UE) for monitoring a downlink signal in a wireless communication system, the processing device comprising:

at least one processor; and
at least one memory connected to the at least one processor and configured to store instructions,

wherein, based on being executed by the at least one processor, the instructions cause the UE to receive configuration information including a cell discontinuous transmission (DTX) configuration from a cell, transmit an uplink signal to the cell, and determine whether to monitor a downlink signal in response to the uplink signal in an inactive period of cell DTX determined based on the configuration information, and

whether to monitor the downlink signal is determined based on a type of the uplink signal.

14. A method of transmitting a downlink signal by a base station (BS) in a wireless communication system, the method comprising:

transmitting configuration information including a cell discontinuous transmission (DTX) configuration to a user equipment (UE);

receiving an uplink signal from the UE; and

determining whether to transmit a downlink signal in response to the uplink signal in an inactive period of cell DTX according to the cell DTX configuration based on a type of the uplink signal.

15. A base station (BS) for transmitting a downlink signal in a wireless communication system, the BS comprising:

a radio frequency (RF) transceiver; and

a processor connected to the RF transceiver,

wherein the processor controls the RF transceiver to transmit configuration information including a cell discontinuous transmission (DTX) configuration to a user equipment (UE) and receive an uplink signal from the UE, and determines whether to transmit a downlink signal in response to the uplink signal in an inactive period of cell DTX according to the cell DTX configuration based on a type of the uplink signal.

# FIG. 1

Initial Cell Search | System Information Reception | Random Access Procedure | General DL/UL Tx/Rx

S18

P/S - SCH & [DLRS] & PBCH — S11

PDCCH/ PDSCH (BCCH) — S12

PRACH — S13 | PDCCH/ PDSCH — S14 | PRACH — S15 | PDCCH/ PDSCH — S16

PDCCH/ PDSCH — S17 | PUSCH/ PUCCH

- DL/UL ACK/NACK
- UE CQI/PMI/Rank Report using PUSCH and PUCCH

# FIG. 2

| One Frame (10ms) |
|---|

| Half-Frame (5ms) | Half-Frame (5ms) |
|---|---|

| Subframe 0 (1ms) | ... | Subframe 4 (1ms) | Subframe 5 (1ms) | ... | Subframe 9 (1ms) |
|---|---|---|---|---|---|

Subframe (1ms)

15KHz

| Slot 0 (14symbols) |
|---|

1ms

30KHz

| Slot 0 (14symbols) | Slot 1 |
|---|---|

500us

60KHz

| Slot 0 (14symbols) | Slot 1 | Slot 2 | Slot 3 |
|---|---|---|---|

250us

120KHz

| Slot 0 (14symbols) | Slot 1 | Slot 2 | Slot 3 | Slot 4 | Slot 5 | Slot 6 | Slot 7 |
|---|---|---|---|---|---|---|---|

125us

EP 4 694 566 A1

# FIG. 3

Resource grid

A carrier
(up to 3300 subcarriers, i. e., 275 RBs)

A BWP

1 RB = 12 subcarriers

1 RE

1 subcarrier

1 symbol

l=0 · · · · ·

k=0

31

# FIG. 4

# FIG. 5

# FIG. 6

Scheduling start

☐ PDCCH monitoring

Data Reception · Time Interval (e.g., subframe, slot) · Paging DRX Cycle

| 'RRC_Connected' state | 'RRC_Idle' state |

FIG. 7

# FIG. 8

FIG. 9

# FIG. 10

Monitoring window of DCI format 2-6

Time gap    On-duration

Actual monitoring occasions

Monitoring periodicity of the SS set

ps-Offset

Monitoring occasion

duration
(within SS set config.)

EP 4 694 566 A1

# FIG. 11

(a)

(b)

FIG. 12

S121

Receive configuration information including cell DTX configuration from cell/BS

S123

Transmit uplink signal to cell/BS

S125

Determine whether to monitor downlink signal in inactive period of cell DTX based on type of uplink signal

FIG. 13

S131

Transmit configuration information including cell
DTX configuration to UE

S133

Receive uplink signal from UE

S135

Determine whether to transmit downlink signal in
inactive period of cell DTX based on type of uplink
signal

# FIG. 14

# FIG. 15

# FIG. 16

100, 200

Device

Communication unit
(e.g., 5G communication unit) — 110

Communication circuit
(e.g., processor(s), memory(s)) — 112

Transceiver(s)
(e.g., RF unit(s), antenna(s)) — 114

Control unit
(e.g., processor(s)) — 120

Memory unit
(e.g., RAM, storage) — 130

Additional components
(e.g., power unit/battery, I/O unit,
driving unit, computing unit) — 140

# FIG. 17

Vehicle or autonomous driving vehicle (100)

Communication unit (110)

Control unit (120)

Memory unit (130)

Driving unit (140a)

Power supply unit (140b)

Sensor unit (140c)

Autonomous driving unit (140d)

108     208

Device (100, 200)

Communication unit (210)

Control unit (220)

Memory unit (230)

Driving unit (140a)

Power supply unit (140b)

Sensor unit (140c)

Autonomous driving unit (140d)

EP 4 694 566 A1

## INTERNATIONAL SEARCH REPORT

| | International application No. |
|---|---|
| | **PCT/KR2024/004659** |

**A.    CLASSIFICATION OF SUBJECT MATTER**

**H04W 76/28**(2018.01)i; **H04W 52/02**(2009.01)i; **H04W 72/21**(2023.01)i; **H04W 72/23**(2023.01)i; **H04W 74/0838**(2024.01)i; **H04B 7/06**(2006.01)i

According to International Patent Classification (IPC) or to both national classification and IPC

**B.    FIELDS SEARCHED**

Minimum documentation searched (classification system followed by classification symbols)

H04W 76/28(2018.01); H04B 7/06(2006.01); H04B 7/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 셀 불연속송신(cell DTX), 빔 실패 리포트 요청(BFR request), 비활성구간(non-active period), 비경합 임의 접속 채널(contention free RACH)

**C.    DOCUMENTS CONSIDERED TO BE RELEVANT**

| Category* | Citation of document, with indication, where appropriate, of the relevant passages | Relevant to claim No. |
|---|---|---|
| X<br>Y<br>A | SAMSUNG. Enhancements on cell DTX/DRX mechanism. R1-2301277, 3GPP TSG RAN WG1 #112. Athens, Greece. 17 February 2023.<br>  See sections 2, 3.2 and 6. | 1-3,7,9-15<br>8<br>4-6 |
| Y | US 2022-0311498 A1 (LENOVO (SINGAPORE) PTE. LTD.) 29 September 2022 (2022-09-29)<br>  See paragraph [0071]. | 8 |
| A | NEC. Discussion on network energy saving techniques in spatial and power domains. R1-2300768, 3GPP TSG RAN WG1 #112. Athens, Greece. 17 February 2023.<br>  See sections 1-3. | 1-15 |
| A | QUALCOMM INCORPORATED. Cell DTX/DRX NES Techniques. R2-2300539, 3GPP TSG-RAN WG2 Meeting #121. Athens, Greece. 17 February 2023.<br>  See pages 2-5. | 1-15 |

☑ Further documents are listed in the continuation of Box C.          ☑ See patent family annex.

| | |
|---|---|
| \*     Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
|---|---|
| **22 July 2024** | **23 July 2024** |

| Name and mailing address of the ISA/KR | Authorized officer |
|---|---|
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

44

**INTERNATIONAL SEARCH REPORT**

International application No.

**PCT/KR2024/004659**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022-075699 A1 (SAMSUNG ELECTRONICS CO., LTD.) 14 April 2022 (2022-04-14) See claims 1-2. | 1-15 |

Form PCT/ISA/210 (second sheet) (July 2022)

**INTERNATIONAL SEARCH REPORT**
Information on patent family members

International application No.

**PCT/KR2024/004659**

| Patent document cited in search report | | | Publication date (day/month/year) | Patent family member(s) | | | Publication date (day/month/year) |
|---|---|---|---|---|---|---|---|
| US | 2022-0311498 | A1 | 29 September 2022 | BR | 112022004704 | A2 | 14 June 2022 |
| | | | | CN | 114846896 | A | 02 August 2022 |
| | | | | EP | 4035484 | A1 | 03 August 2022 |
| | | | | KR | 10-2022-0068219 | A | 25 May 2022 |
| | | | | US | 11909488 | B2 | 20 February 2024 |
| | | | | WO | 2021-059245 | A1 | 01 April 2021 |
| WO | 2022-075699 | A1 | 14 April 2022 | CN | 116325871 | A | 23 June 2023 |
| | | | | EP | 4211917 | A1 | 19 July 2023 |
| | | | | KR | 10-2023-0084265 | A | 12 June 2023 |
| | | | | US | 11943037 | B2 | 26 March 2024 |
| | | | | US | 2022-0109489 | A1 | 07 April 2022 |

Form PCT/ISA/210 (patent family annex) (July 2022)